# EUROPEAN PATENT APPLICATION

(11) **EP 4 813 800 A1**
(43) Date of publication of application: **30.09.2026**
(21) Application number: 26168066.4
(22) Date of filing: 26.03.2026
(51) Int. Cl.: B62B 9/14, B62B 9/20

(54) **STROLLER**

(30) Priority: 26.03.2025 CN 202510374393
(71) Applicant: Wonderland Switzerland AG, 6312 Steinhausen (CH)
(72) Inventor: Guo, Zhengwen, Guangdong, 523648 (CN); Hu, Zhiqiang, Guangdong, 523648 (CN)
(74) Representative: ERNICKE Patent- und Rechtsanwälte PartmbB

(57) **Abstract**

The present application relates to a stroller (10), including: a handle frame (100) including an upper handle frame (110) and a lower handle frame (120) that are pivotally connected; a canopy mechanism (300) pivotable relative to the lower handle frame (120) and disposed in linkage with the upper handle frame (110); and a locking mechanism (400) disposed between the canopy mechanism (300) and the lower handle frame (120) to restrict or allow the canopy mechanism (300) to pivot relative to the lower handle frame (120). In a process of the upper handle frame (110) pivoting relative to the lower handle frame (120), the upper handle frame (110) is capable of driving the canopy mechanism (300) to be collapsed or deployed, and drives the locking mechanism (400) to be unlocked, to allow the canopy mechanism (300) to pivot in a direction approaching or away from the lower handle frame (120).

## Description

### TECHNICAL FIELD

The present application relates to the technical field of child carriers, and in particular, to a stroller.

### BACKGROUND

In the field of child travel, strollers are a relatively common tool. In order to provide children with a comfortable and safe occupant environment, strollers are generally provided with an adjustable canopy mechanism to achieve functions such as sunshade, rain protection, and wind protection to meet the needs of different usage scenarios. However, when folding or unfolding the common strollers on the market, the canopy mechanism cannot complete the corresponding actions synchronously with the stroller as a whole, and needs to be folded or unfolded manually separately. This operation method not only increases the operation steps and difficulty of the user during use, making the operation complicated and cumbersome, but also reduces the convenience and efficiency of use to a certain extent.

### SUMMARY

According to various embodiments of the present application, a stroller is provided.

In an aspect, the present application provides a stroller, including: a handle frame including an upper handle frame and a lower handle frame that are pivotally connected to each other; a canopy mechanism pivotable relative to the lower handle frame and disposed in linkage with the upper handle frame; and a locking mechanism disposed between the canopy mechanism and the lower handle frame to restrict or allow the canopy mechanism to pivot relative to the lower handle frame. In a process of the upper handle frame pivoting relative to the lower handle frame, the upper handle frame is capable of driving the canopy mechanism to be collapsed or deployed, and drives the locking mechanism to be unlocked, to allow the canopy mechanism to pivot in a direction approaching or away from the lower handle frame.

In some embodiments, when the upper handle frame is pivoted in the direction approaching the lower handle frame, the upper handle frame drives the canopy mechanism to be collapsed, and the collapsed canopy mechanism is pivoted towards the lower handle frame as the upper handle frame is pivoted. Alternatively,
when the upper handle frame is pivoted in the direction away from the lower handle frame, the upper handle frame drives the canopy mechanism to be deployed, and the deployed canopy mechanism is pivoted away from the lower handle frame as the upper handle frame is pivoted.

In some embodiments, the canopy mechanism includes a support base and a first canopy bar that are connected to each other. The support base is pivotable relative to the lower handle frame around a rotation axis, to enable the first canopy bar to pivot relative to the lower handle frame. The process of the upper handle frame pivoting relative to the lower handle frame includes a first stage in which the support base and the first canopy bar are fixed relative to the lower handle frame, and a second stage in which the upper handle frame is pivoted to drive the first canopy bar to pivot in the direction approaching or away from the lower handle frame.

In some embodiments, the canopy mechanism has a deployed state and a collapsed state; the canopy mechanism further includes a second canopy bar. The second canopy bar is fixed relative to the upper handle frame. The second canopy bar is capable of being pivoted relative to the lower handle frame along with the upper handle frame. When the canopy mechanism is in the deployed state, the first canopy bar and the second canopy bar are away from each other, and when the canopy mechanism is in the collapsed state, the first canopy bar and the second canopy bar approach each other.

In some embodiments, a width of the first canopy bar in a first direction, a width of the second canopy bar in the first direction, and a width of the upper handle frame in the first direction satisfy a condition of W1>W3>W2, where W1 denotes the width of the first canopy bar in the first direction, W2 denotes the width of the second canopy bar in the first direction, and W3 denotes the width of the upper handle frame in the first direction.

In some embodiments, the handle frame further includes a first pivot joint. The first pivot joint includes a first connecting base and a second connecting base that are pivotally connected to each other. The first connecting base is connected to the upper handle frame, the second connecting base is connected to the lower handle frame. The support base is arranged on a side of the second connecting base away from the first connecting base and rotatable around the rotation axis.

In some embodiments, the locking mechanism includes an engaging protrusion and an engaging recess. One of the support base and the second connecting base is provided with the engaging recess, and the other of the support base and the second connecting base is provided with the engaging protrusion. When the engaging protrusion extends into the engaging recess, the support base is restricted from rotating relative to the second connecting base, and when the engaging protrusion is separated from the engaging recess, the support base is allowed to rotate relative to the second connecting base.

In some embodiments, a plurality of the engaging recesses are provided. The plurality of the engaging recesses are spaced apart in a circumferential direction around the rotation axis. In the first stage, the engaging protrusion remains extending into a current one of the plurality of the engaging recesses, and in the second stage, the engaging protrusion is capable of being separated from the current engaging recess and extending into an adjacent engaging recess of the plurality of the engaging recesses to restrict a continuous rotation of the support base relative to the second connecting base.

In some embodiments, the support base is movable relative to the second connecting base in an axial direction of the rotation axis and has a first position and a second position. When the support base is at the first position, the engaging protrusion extends into one of the plurality of engaging recesses; and when the support base is at the second position, the engaging protrusion is separated from the one of the plurality of engaging recesses. In the first stage, the support base is kept at the first position, and in the second stage, the support base moves back and forth between the first position and the second position.

In some embodiments, the handle frame further includes: a cover arranged on a side of the support base away from the second connecting base and connected to the second connecting base, and a movable gap through which the support base moves in an axial direction of the rotation axis being formed between the cover and the support base; and a first elastic member arranged in the movable gap and abutting between the cover and the support base to bias the support base towards the first position, so that the support base can remain at the first position.

In some embodiments, the engaging recess and/or the engaging protrusion is provided with a guiding inclined surface. When the support base rotates relative to the second connecting base, the engaging protrusion pushes against the engaging recess via the guiding inclined surface, and the support base is driven to switch from the first position to the second position.

In some embodiments, the one of the support base and the second connecting base that is provided with the engaging recess is further provided with a locking recess. The locking recess is adapted to be in a locking fit with the engaging protrusion. A dimension of the locking recess is different from a dimension of the engaging recess.

In some embodiments, the locking recess and/or the engaging protrusion is provided with a sliding inclined surface. The engaging protrusion pushes against the locking recess by the sliding inclined surface to enable the engaging protrusion to be separated from the locking recess.

In some embodiments, one of the second connecting base and the support base is provided with a limiting rib, and the other of the second connecting base and the support base is provided with a limiting groove. The limiting rib can extend into the limiting groove in a direction parallel to the rotation axis; when the engaging protrusion is separated from the engaging recess, the limiting rib is separated from the limiting groove.

In some embodiments, one of the second connecting base and the support base is provided with a limiting rib, and the other of the second connecting base and the support base is provided with a limiting groove. The limiting rib remains extended into the limiting groove in a direction parallel to the rotation axis, and an end of the limiting groove limits a rotation stroke of the support base relative to the second connecting base.

In some embodiments, the one of the support base and the second connecting base that is provided with the engaging recess is further provided with a locking recess. The locking recess is adapted to be in a locking fit with the engaging protrusion. The locking recess faces an end of the limiting groove in a radial direction of the rotation axis.

In some embodiments, the locking mechanism includes a bracket, an engaging protrusion and an engaging recess. The bracket is movably arranged between the second connecting base and the support base in the axial direction of the rotation axis. The bracket is restricted from rotating relative to the second connecting base. One of the support base and the bracket is provided with the engaging recess, and the other of the support base and the bracket is provided with the engaging protrusion. When the engaging protrusion extends into the engaging recess, the support base is restricted from rotating relative to the second connecting base, and when the engaging protrusion is separated from the engaging recess, the support base is allowed to rotate relative to the second connecting base.

In some embodiments, a plurality of the engaging recesses are provided. The plurality of the engaging recesses are spaced apart in a circumferential direction around the rotation axis. In the first stage, the engaging protrusion remains extending into a current one of the plurality of the engaging recesses, and in the second stage, the engaging protrusion is capable of being separated from the current engaging recess and extending into an adjacent engaging recess of the plurality of the engaging recesses to restrict a continuous rotation of the support base relative to the second connecting base.

In some embodiments, the locking mechanism further includes a positioning recess, and the second connecting base is provided with the positioning recess. The bracket is provided with the engaging protrusion, and the bracket has a third position and a fourth position. The support base is provided with the engaging recess. When the bracket is at the third position, the engaging protrusion engages with the engaging recess and the positioning recess to restrict the rotation of the support base relative to the second connecting base; when the bracket is at the fourth position, the engaging protrusion is engaged with the positioning recess and disengaged from the engaging recess to allow the support base to rotate relative to the second connecting base.

In some embodiments, the engaging recess and/or the engaging protrusion is provided with a guiding inclined surface. When the support base rotates relative to the second connecting base, the engaging protrusion pushes against the engaging recess by the guiding inclined surface, and the bracket is driven to switch from the third position to the fourth position.

In some embodiments, a second elastic member is arranged between the bracket and the second connecting base. The second elastic member biases the bracket towards the third position, so that the bracket can remain at the third position.

In some embodiments, one of the second connecting base and the bracket is further provided with a limiting protrusion, and the other of the second connecting base and the bracket is further provided with a limiting recess. The limiting protrusion is engaged with the limiting recess to restrict the bracket from rotating relative to the second connecting base.

In some embodiments, the handle frame further includes a locking retaining mechanism disposed between the upper handle frame and the lower handle frame. When the upper handle frame is pivoted relative to the lower handle frame to be folded, the locking retaining mechanism is adapted to lock the upper handle frame and the lower handle frame to restrict the upper handle frame from unfolding relative to the lower handle frame.

In another aspect, the present application further provides a stroller, including: a handle frame; a canopy mechanism rotatably disposed on the handle frame; and a locking mechanism disposed between the handle frame and the canopy mechanism and configured to restrict the continuous rotation of the canopy mechanism relative to the handle frame.

### BRIEF DESCRIPTION OF THE DRAWINGS

The drawings constituting a part of the present application are used to provide a further understanding of the present application. The illustrative embodiments of the present application and their descriptions are used to explain the present application and do not constitute an improper limitation on the present application.

In order to more clearly illustrate the technical solutions in the embodiments of the present application, the drawings required for use in the description of the embodiments will be briefly introduced below. Clearly, the drawings described below are only for some embodiments of the present application. For ordinary skills in the art, other drawings can be obtained based on these drawings without creative work.

In addition, the drawings are not drawn to a 1:1 scale, and the relative sizes of the various elements are drawn only as examples in the drawings and are not necessarily drawn according to the true scale. In which:
FIG. 1 is a side view of a stroller according to an embodiment of the present application, with a canopy mechanism in a deployed state;
FIG. 2 is a side view of a stroller according to an embodiment of the present application, with the canopy mechanism between the deployed state and a collapsed state;
FIG. 3 is a side view of a stroller in an embodiment of the present application, with the stroller between an unfolded state and a folded state, and the canopy mechanism approaching the collapsed state;
FIG. 4 is a side view of a stroller in an embodiment of the present application, with the stroller in the folded state and the canopy mechanism in the collapsed state;
FIG. 5 is a side view of a handle frame in an embodiment of the present application, with the handle frame unfolded and the canopy mechanism in the collapsed state;
FIG. 6 is a front view of the handle frame shown in FIG. 5;
FIG. 7 is a perspective view of a handle frame in a first embodiment of the present application;
FIG. 8 is an exploded view of the handle frame shown in FIG. 7;
FIG. 9 is an enlarged view of portion A shown in FIG. 8;
FIG. 10 is an enlarged view of portion B shown in FIG. 9;
FIG. 11 is an enlarged view of portion C in FIG. 9;
FIG. 12 is a sectional view taken along a line U1-U1 shown in FIG. 5, with a support base is in a first position;
FIG. 13 is a sectional view taken along a line U2-U2 shown in FIG. 7, with the support base in a second position;
FIG. 14 is a side view of the handle frame in the first embodiment of the present application, with the handle frame unfolded and the canopy mechanism in the deployed state;
FIG. 15 is a side view of the handle frame in the first embodiment of the present application, with the handle frame between the unfolded state and the folded state, and the canopy mechanism approaching the collapsed state;
FIG. 16 is a side view of the stroller in the first embodiment of the present application, with the stroller in the folded state and a cover omitted;
FIG. 17 is a sectional view taken along a line U3-U3 shown in FIG. 1, with a wheel frame is omitted;
FIG. 18 is a perspective view of a support base of a stroller in a second embodiment of the present application;
FIG. 19 is a side view of a handle frame in the second embodiment of the present application, with the handle frame unfolded and the canopy mechanism in a deployed state;
FIG. 20 is an exploded view of a handle frame of a stroller in a third embodiment of the present application;
FIG. 21 is a sectional view of the handle frame of the stroller in the third embodiment of the present application;
FIG. 22 is a perspective view of a stroller in a fourth embodiment of the present application;
FIG. 23 is a sectional view taken along a line U4-U4 shown in FIG. 22;
FIG. 24 is a sectional view of the stroller in the fourth embodiment of the present application, with the stroller in a folded state;
FIG. 25 is a partial exploded view of the stroller shown in FIG. 22;
FIG. 26 is an enlarged view of portion D shown in FIG. 25;
FIG. 27 is a partial exploded view of a handle frame of a stroller in a fifth embodiment of the present application;
FIG. 28 is a sectional view of a first pivot joint taken along a line U5 -U5 shown in FIG. 27;
FIG. 29 is a perspective view of an upper handle frame of the handle frame shown in FIG. 27 when in a folded position; and
FIG. 30 is a sectional view taken along a line U6-U6 shown in FIG. 29, with the handle frame omitted.

Illustration for reference numerals:
10, stroller; 100, handle frame; 110, upper handle frame; 120, Lower handle frame; 130, first pivot joint; 131, first connecting base; 1311, first cavity; 1312, first locking groove; 131a, first pivoting portion; 131b, first connecting portion; 131c, moving channel; 1311c, limiting step; 132, second connecting base; 1321, limiting rib; 1322, limiting recess; 1323, second cavity; 132a, second pivoting portion; 132b, second connecting portion; 133, locking member; 1331, locking tooth; 1332, driving portion; 134, driving member; 135, fourth elastic member; 136, fixing member; 140, cover; 150, first elastic member; 200, wheel frame; 210, front wheel frame; 220, rear wheel frame; 300, canopy mechanism; 310, support base; 311, limiting groove; 3111, first end; 3112, second end; 320, first canopy bar; 330, second canopy bar; 340, third canopy bar; 350, canopy fabric; 400, locking mechanism; 410, engaging protrusion; 411, guiding inclined surface; 412, sliding inclined surface; 420, engaging recess; 420a, first engaging recess; 420b, second engaging recess; 420c, third engaging recess; 421, guiding inclined surface; 440, bracket; 441, limiting protrusion; 450, positioning recess; 460, locking recess; 461, sliding inclined surface; 500, second pivot joint; 610, pushing gap; 620, movable gap; 700, locking retaining mechanism; 710, retaining member; 711, first rod; 712, second rod; 713, third rod; 714, lock head; 715, engaging lug; 720, retaining recess; 721, guiding inclined surface; 730, third elastic member; 740, mounting bracket; 800, second elastic member; 900, unlocking operating mechanism; S1, rotation axis; Q1, first pivot point; Q2, second pivot point; F1, first direction; F2, second direction; F3, third direction; α1, first angle; α2, second angle; α3, third angle; α4, fourth angle; α5, fifth angle; α6, sixth angle; α0, center angle.

### DETAILED DESCRIPTION

In order to make the objects, features and advantages of the present application more clear and easy to understand, the specific implementations of the present application are described in detail below in conjunction with the accompanying drawings. In the following description, many specific details are set forth to facilitate a full understanding of the present application. However, the present application can be implemented in many other ways different from those described herein, and those skilled in the art can make similar improvements without violating the connotation of the present application, so the present application is not limited by the specific embodiments disclosed below.

Some embodiments of the present application provide a stroller 10. The overall structure of the stroller 10 is substantially symmetrical on both sides, and can be used as a child stroller, a pet stroller, or a cargo stroller, etc. For example, in this embodiment, the stroller 10 is used as a child stroller to illustrate its configuration and working principle.

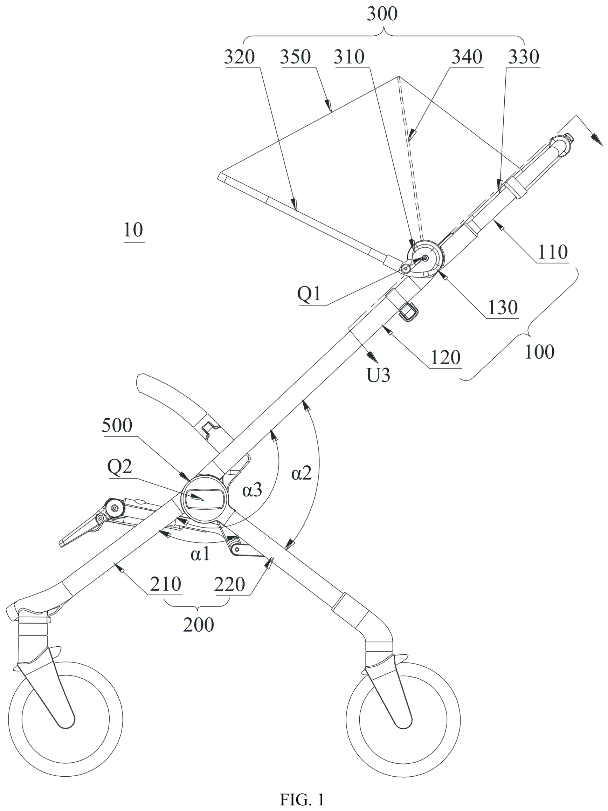

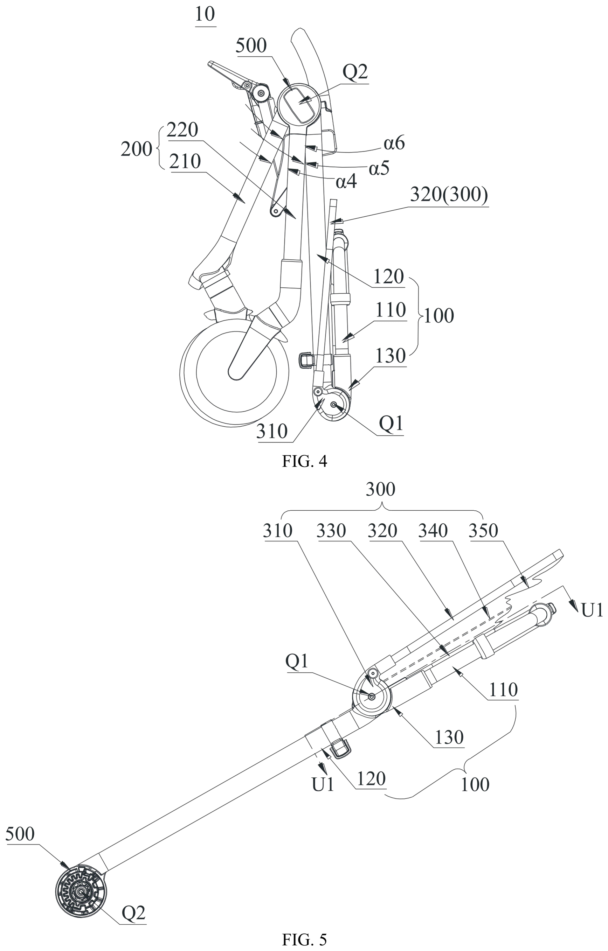

Referring to FIGS. 1 to 4, in some embodiments, the stroller 10 may include, for example, a handle frame 100 and a wheel frame 200, which are pivotally connected to each other so that the stroller 10 can be switched between an unfolded state (see FIG. 1) and a folded state (see FIG. 4). The wheel frame 200 includes a front wheel frame 210 and a rear wheel frame 220. The front wheel frame 210 and the rear wheel frame 220 may be pivotally connected to each other at a second pivot point Q2. Alternatively, the front wheel frame 210 and the rear wheel frame 220 may be pivotally connected at the second pivot point Q2 via a second pivot joint 500. The handle frame 100 may be pivotally connected to the front wheel frame 210 or the rear wheel frame 220 alone. In other embodiments, the handle frame 100 may also be pivotally connected to both the front wheel frame 210 and the rear wheel frame 220, which is not specifically limited herein. In this embodiment, the handle frame 100 is pivotally connected to the front wheel frame 210 and the rear wheel frame 220 through the second pivot joint 500. In other words, the handle frame 100, the front wheel frame 210 and the rear wheel frame 220 are pivotally connected at the second pivot point Q2. As shown in FIG. 1, when the stroller 10 is in the unfolded state, the handle frame 100, the front wheel frame 210 and the rear wheel frame 220 are spaced apart in a circumferential direction of the second pivot joint 500, and the rear wheel frame 220 is located between the front wheel frame 210 and the handle frame 100 in the circumferential direction of the second pivot joint 500, a first angle α*1* is formed between the front wheel frame 210 and the rear wheel frame 220, a second angle *α2* is formed between the handle frame 100 and the rear wheel frame 220, and a third angle *α3* is formed between the handle frame 100 and the front wheel frame 210. As shown in FIG. 4, when the stroller 10 is in the folded state, the rear wheel frame 220 and the front wheel frame 210 approach each other, a fourth angle *α4* is formed between the front wheel frame 210 and the rear wheel frame 220, the handle frame 100 approaches the rear wheel frame 220, a fifth angle *α5* is formed between the handle frame 100 and the rear wheel frame 220, and a sixth angle *α6* is formed between the handle frame 100 and the front wheel frame 210, where *α1>α4*, *α2>α5*, *α3>α6.* Therefore, when the stroller 10 needs to be used, the stroller 10 can be in the unfolded state. When the stroller 10 needs to be stored, the stroller 10 can be in the folded state to save the space it occupies and facilitate storage.

In some embodiments, as shown in FIGS. 1 to 4, the handle frame 100 includes an upper handle frame 110 and a lower handle frame 120 that are pivotally connected to each other. The upper handle frame 110 and the lower handle frame 120 are pivotally connected at a first pivot point Q1. An end of the lower handle frame 120 away from the upper handle frame 110 is connected to the second pivot joint 500. The handle frame 100 is designed to be in a foldable structure, so that the stroller 10 has a smaller folded volume when it is in the folded state. In this embodiment, when the stroller 10 is in the unfolded state, the aforementioned second angle *α2* is formed between the lower handle frame 120 and the rear wheel frame 220, and the aforementioned third angle *α3* is formed between the lower handle frame 120 and the front wheel frame 210. The angle between the upper handle frame 110 and the lower handle frame 120 is 180°, and the upper handle frame 110 and the lower handle frame 120 can be regarded as being on the same plane (see FIG. 1). In other embodiments, when the stroller 10 is in the unfolded state, the angle between the upper handle frame 110 and the lower handle frame 120 may also be greater than 180° or less than 180°, and no specific limitation thereon is made herein. Specifically, when the stroller 10 is switched from the unfolded state to the folded state, the upper handle frame 110 pivots relative to the lower handle frame 120, and approaches the lower handle frame 120 and is folded, and the lower handle frame 120 pivots around the second pivot joint 500 to approach the rear wheel frame 220 and is folded. When the stroller 10 is switched from the folded state to the unfolded state, the upper handle frame 110 pivots relative to the lower handle frame 120 to move away from the lower handle frame 120, and the lower handle frame 120 pivots around the second pivot joint 500 to move away from the rear wheel frame 220.

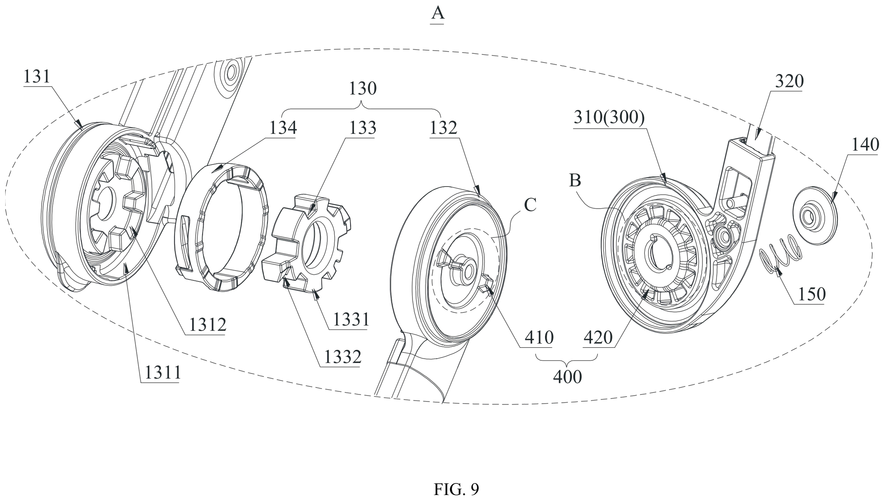

Referring to FIGS. 1 to 6, in some embodiments, the stroller 10 further includes a canopy mechanism 300 and a locking mechanism 400 (see FIG. 9, see below for the specific configuration). The canopy mechanism 300 can pivot relative to the lower handle frame 120 and is disposed in linkage with the upper handle frame 110. The locking mechanism 400 is arranged between the canopy mechanism 300 and the lower handle frame 120, and is configured to restrict or allow the canopy mechanism 300 to pivot relative to the lower handle frame 120. In the process of the upper handle frame 110 pivoting relative to the lower handle frame 120, the upper handle frame 110 can drive the canopy mechanism 300 to be collapsed or deployed, and apply external force to the canopy mechanism 300 to drive the locking mechanism 400 to be unlocked, so as to allow the canopy mechanism 300 to pivot in a direction approaching or away from the lower handle frame 120. In the present disclosure, in the process of the upper handle frame 110 pivoting relative to the lower handle frame 120, the pivoting motion of the upper handle frame 110 can result in/permit the collapse or deployment of the canopy mechanism 300.

Still referring to FIGS. 1 to 6, in some embodiments, the canopy mechanism 300 includes a support base 310 and a first canopy bar 320 that are connected to each other. The support base 310 is connected to the handle frame 100 and can rotate relative to the lower handle frame 120 around a rotation axis S1, so that the first canopy bar 320 can pivot relative to the lower handle frame 120. In some embodiments, the canopy mechanism 300 further includes a second canopy bar 330. The second canopy bar 330 remains fixed relative to the upper handle frame 110. The second canopy bar 330 can pivot relative to the lower handle frame 120 with the upper handle frame 110. In the present application, the canopy mechanism 300 has a deployed state and a collapsed state. Specifically, as shown in FIG. 1, when the canopy mechanism 300 is in the deployed state, the first canopy bar 320 and the second canopy bar 330 are separated from each other. As shown in FIGS. 4 and 5, when the canopy mechanism 300 is in the collapsed state, the first canopy bar 320 and the second canopy bar 330 approach each other. Specifically, an included angle between the first canopy bar 320 and the second canopy bar 330 when the canopy mechanism 300 is in the deployed state is greater than an included angle between the first canopy bar 320 and the second canopy bar 330 when the canopy mechanism 300 is in the collapsed state.

It should be noted that the above-mentioned "the second canopy bar 330 remains fixed relative to the upper handle frame 110" can be achieved in a variety of ways. For example, the second canopy bar 330 can be directly fixedly connected to the upper handle frame 110. Alternatively, the second canopy bar 330 can be indirectly connected to the upper handle frame 110 by other components (such as a first connecting base 131). No specific limitation thereon is made herein.

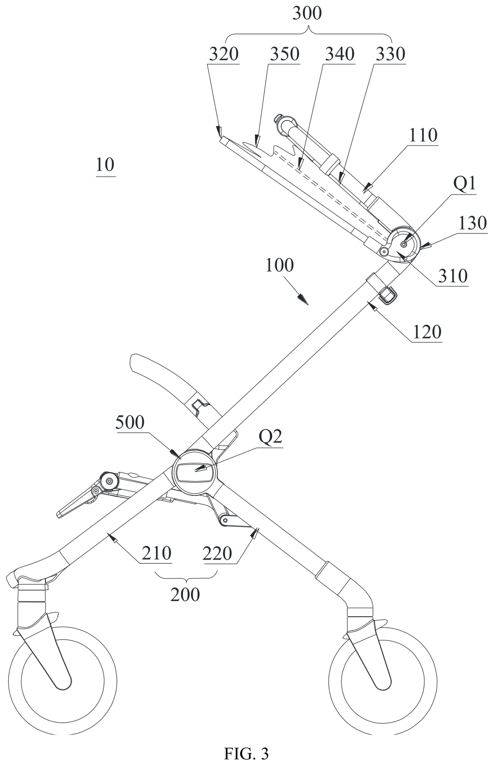

Referring to FIGS. 1 to 3, in some embodiments, the canopy mechanism 300 further includes a canopy fabric 350. The canopy fabric 350 is connected between the first canopy bar 320 and the second canopy bar 330. As shown in FIG. 1, when the canopy mechanism 300 is in the deployed state, the second canopy bar 330 and the first canopy bar 320 are away from each other, and the canopy fabric 350 is fully deployed between the first canopy bar 320 and the second canopy bar 330. In this case, the canopy fabric 350 forms a shielding surface of a certain area, which is configured to shield sunlight or rain, etc., and provides a good occupant environment for a child. As shown in FIGS. 3 and 5, when the canopy mechanism 300 is in the collapsed state, the second canopy bar 330 and the first canopy bar 320 approach each other, and the canopy fabric 350 is collapsed and stacked between the first canopy bar 320 and the second canopy bar 330. In the present application, as shown in FIG. 4, when the stroller 10 is in the folded state, the canopy mechanism 300 is in the collapsed state, which helps to reduce the space occupied by the stroller 10 and makes the stroller 10 have a smaller folded volume as a whole. As shown in FIG. 1, when the stroller 10 is in the unfolded state, the canopy mechanism 300 can be in the deployed state, and the canopy mechanism 300 can effectively play roles in sunshade, rainproof, windproof, etc., so as to improve the comfort of the child when placed in the stroller 10.

In some embodiments, the process of the upper handle frame 110 pivoting relative to the lower handle frame 120 includes a first stage and a second stage. For example, when the stroller 10 is in the unfolded state and the canopy mechanism 300 is in the deployed state, during the process of the upper handle frame 110 pivoting relative to the lower handle frame 120 to fold the handle frame 100, referring to FIGS. 1 to 3, in the first stage, the second canopy bar 330 rotates together with the upper handle frame 110 to approach the lower handle frame 120. In this process, under the locking action of the locking mechanism 400 (the specific principle thereof is described later), the first canopy bar 320 and the support base 310 remain fixed relative to the lower handle frame 120. As the second canopy bar 330 gradually approaches the first canopy bar 320, the stretched canopy fabric 350 gradually relaxes due to the gradual decrease in tension as the distance between the two canopy bars decreases, and is naturally collapsed between the first canopy bar 320 and the second canopy bar 330 until the canopy mechanism 300 is in the collapsed state. Referring to FIGS. 3 and 4, in the second stage, the canopy mechanism 300 remains in the collapsed state, and the upper handle frame 110 is continuously rotated, so that the upper handle frame 110 drives the entire canopy mechanism 300 to pivot towards the lower handle frame 120, that is, based on the continuous pivoting of the upper handle frame 110, an external force (specifically a pushing force) is applied to the first canopy bar 320 to drive the first canopy bar 320 to pivot towards the lower handle frame 120 together, until the upper handle frame 110 is fully folded relative to the lower handle frame 120. In other words, when the upper handle frame 110 pivots towards the lower handle frame 120, the upper handle frame 110 first drives the canopy mechanism 300 to be collapsed, and the collapsed canopy mechanism 300 pivots towards the lower handle frame 120 along with the pivoting of the upper handle frame 110. For another example, when the stroller 10 is in the folded state and the canopy mechanism 300 is in the collapsed state, during the process of the upper handle frame 110 pivoting relative to the lower handle frame 120 to unfold the handle frame 100, in the first stage, the second canopy bar 330 rotates together with the upper handle frame 110 to move away from the lower handle frame 120. During this process, under the locking action of the locking mechanism 400, the first canopy bar 320 and the support base 310 remain fixed relative to the lower handle frame 120. As the second canopy bar 330 gradually moves away from the first canopy bar 320, the relaxed canopy fabric 350 is gradually tightened as the distance between the two canopy bars increases until it is fully deployed, so that the canopy mechanism 300 is in the deployed state. In the second stage, the canopy mechanism 300 remains in the deployed state, and the upper handle frame 110 is continuously rotated, so that the upper handle frame 110 drives the entire canopy mechanism 300 to pivot in a direction away from the lower handle frame 120, that is, based on the continuous pivoting of the upper handle frame 110, an external force (specifically a pulling force) is applied to the first canopy bar 320 to drive the first canopy bar 320 to pivot in a direction away from the lower handle frame 120, until the upper handle frame 110 is fully deployed relative to the lower handle frame 120. In other words, when the upper handle frame 110 pivots away from the lower handle frame 120, the upper handle frame 110 first drives the canopy mechanism 300 to be deployed, and the deployed canopy mechanism 300 pivots away from the lower handle frame 120 along with the pivoting of the upper handle frame 110. It can be seen that in the present application, no matter whether the stroller 10 is in the process of folding or unfolding, the canopy mechanism 300 can be driven to move synchronously to be deployed or collapsed, and the user does not need to manually operate the canopy mechanism 300 separately. This design simplifies the operating process during unfolding or folding the stroller 10, and effectively improves the convenience and efficiency of using the stroller 10.

It should be noted that only when the applied external force is greater than the locking force that is applied by the locking mechanism 400 to act between the lower handle frame 120 and the support base 310 and needs to be overcome by the support base 310, the first canopy bar 320 can drive the support base 310 to pivot relative to the lower handle frame 120, thereby achieving the movement of approaching or moving away from the lower handle frame 120.

In some embodiments, in addition to the fact that the canopy mechanism 300 can be driven to switch between the deployed state and the collapsed state synchronously during the process of folding or unfolding of the stroller 10, the user can also operate the canopy mechanism 300 separately when the stroller 10 is in the unfolded state to switch the canopy mechanism 300 between the deployed state and the collapsed state. Specifically, in the present application, when the stroller 10 is in the unfolded state and the canopy mechanism 300 is in the deployed state, the canopy mechanism 300 can play the role of sunshade, rainproof, windproof, etc. In this case, if the user wants to fold the canopy mechanism 300 to expand the field of vision of the child when placed in the stroller 10, it is only required to directly apply a force (such as a pushing or pulling force) to the first canopy bar 320 to make it rotate in a direction approaching the second canopy bar 330. On the contrary, when the stroller 10 is in the unfolded state and the canopy mechanism 300 is in the collapsed state, if the user wants to unfold the canopy mechanism 300, it is only required to directly apply a force (such as a pushing force or a pulling force) to the first canopy bar 320 to rotate it in a direction away from the second canopy bar 330. Similarly, it should be noted that only when the applied force is greater than the locking force that is applied by the locking mechanism 400 to act between the lower handle frame 120 and the support base 310 and needs to be overcome by the support base 310, the first canopy bar 320 can drive the support base 310 to pivot relative to the lower handle frame 120, thereby achieving the movement of approaching or moving away from the upper handle frame 110.

Referring to FIGS. 1 to 3, in some embodiments, the canopy mechanism 300 may further be provided with at least one third canopy bar 340. The at least one third canopy bar 340 is provided between the first canopy bar 320 and the second canopy bar 330 to play a good supporting role. Specifically, by providing the third canopy bar 340, the canopy area between the first canopy bar 320 and the second canopy bar 330 can be more effectively supported. Such support not only helps to enhance the structural stability of the entire canopy fabric 350 and reduce the deformation and collapse of the canopy fabric 350, but also makes the canopy fabric 350 more flat when it is deployed, which is beneficial to improving the aesthetics and practicality of the canopy mechanism 300 when it is in the deployed state.

It should be noted that the third canopy bar 340 is generally covered by the canopy fabric 350, so the third canopy bar 340 is generally not visible from the outside of the canopy fabric 350. In this embodiment, in order to clearly know the arrangement position of the third canopy bar 340, the third canopy bar 340 is shown by a dotted line in the relevant figure.

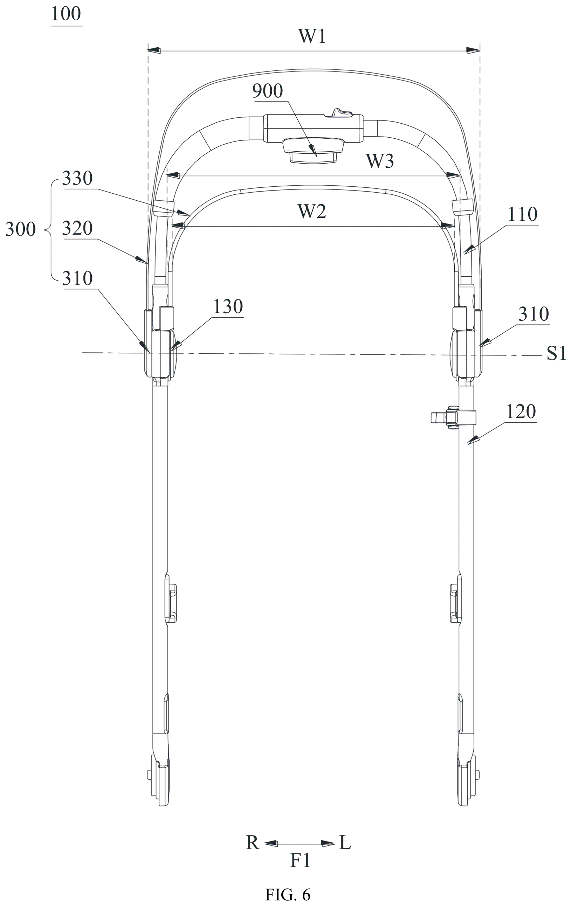

Referring to FIG. 6, in some embodiments, a width of the first canopy bar 320 in a leftward-rightward direction (i.e., a first direction F1) of the stroller 10 is denoted by W1, a width of the second canopy bar 330 in the first direction F1 is denoted by W2, and a width of the upper handle frame 110 in the first direction F1 is denoted by W3. W1, W2 and W3 satisfy a condition of W1>W3>W2. By setting the widths in this way, favorable conditions can be created for the rapid deployment or collapse of the canopy mechanism 300, making the canopy mechanism 300 smoother and more efficient during the deployment or collapse process. Meanwhile, this width setting helps to ensure that the canopy mechanism 300 presents a coordinated and beautiful visual effect in appearance.

It should be noted that, unless otherwise clearly specified and limited, the orientational terms such as "leftward" and "rightward" of the stroller 10 in various embodiments of the present application are referenced to the "leftward" and "rightward" directions of the stroller 10 in normal travel, and the "leftward" and "rightward" directions are schematically shown by arrows L and R in the figures respectively. These orientational terms are only used to make the description of the embodiments of the present application clearer and are not used to improperly limit the protection scope of the present application.

Referring to FIGS. 6 to 8, in some embodiments, the handle frame 100 further includes a first pivot joint 130. The upper handle frame 110 is pivotally connected to the lower handle frame 120 via the first pivot joint 130. An end of the lower handle frame 120 away from the first pivot joint 130 is connected to the second pivot joint 500. The support base 310 is disposed on the first pivot joint 130 and rotatable around the rotation axis S1. In other words, the support base 310 is disposed on the first pivot joint 130 and rotatable relative to the first pivot joint 130 around the rotation axis S1. Specifically, in this embodiment, the first pivot joint 130 includes a first connecting base 131 and a second connecting base 132 that are pivotally connected to each other. Specifically, the first connecting base 131 and the second connecting base 132 are pivotally connected at the first pivot point Q1. The first connecting base 131 is connected to the upper handle frame 110, and the second connecting base 132 is connected to the lower handle frame 120. The support base 310 is disposed on a side of the second connecting base 132 away from the first connecting base 131 and rotatable around the rotation axis S1, and the locking mechanism 400 is disposed between the second connecting base 132 and the support base 310.

It should be noted that in this embodiment, the second canopy bar 330 is connected to the first connecting base 131. Therefore, when the first connecting base 131 rotates relative to the second connecting base 132, both the upper handle frame 110 and the second canopy bar 330 can rotate around the first pivot point Q1 relative to the lower handle frame 120. In addition, in this embodiment, the first pivot point Q1 and the rotation axis S1 are coaxially arranged. It can be understood that the first connecting base 131, the second connecting base 132 and the support base 310 are pivoted connected to the same pivot shaft. In other embodiments, the first pivot point Q1 can also be offset from the rotation axis S1, which is not specifically limited herein.

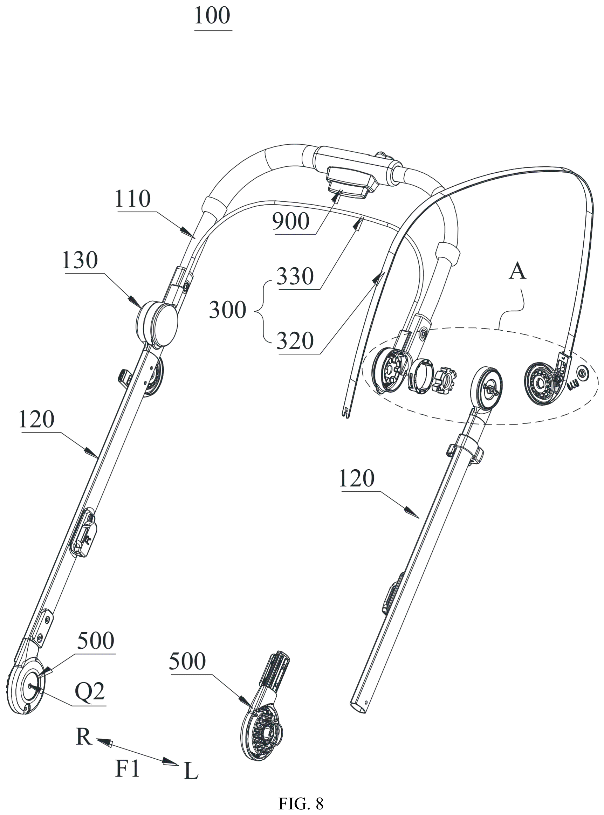

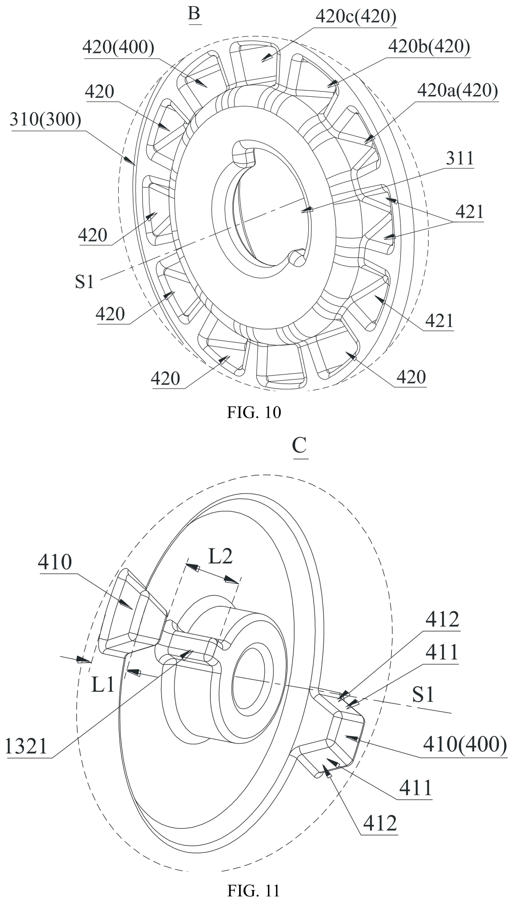

Reference is made to FIGS. 8 to 11, where FIG. 8 shows an exploded view of a handle frame 100 of a stroller 10 in a first embodiment of the present application; FIG. 9 is an enlarged view of portion A shown in FIG. 8; FIG. 10 is an enlarged view of portion B shown in FIG. 9; and FIG. 11 is an enlarged view of portion C shown in FIG. 9.

Referring to FIGS. 8 and 9, in the first embodiment, the locking mechanism 400 includes an engaging protrusion 410 and an engaging recess 420. One of the support base 310 and the second connecting base 132 is provided with the engaging recess 420, and the other of the support base 310 and the second connecting base 132 is provided with the engaging protrusion 410. The engaging protrusion 410 is configured to cooperate with the engaging recess 420 in a concave-convex fit. When the engaging protrusion 410 extends into the engaging recess 420, the support base 310 is restricted from rotating relative to the second connecting base 132. When the engaging protrusion 410 is separated from the engaging recess 420, the support base 310 is allowed to rotate relative to the second connecting base 132. Specifically, in the first stage of the two stages of the upper handle frame 110 pivoting relative to the lower handle frame 120, since the upper handle frame 110 does not apply an external force to the first canopy bar 320, the engaging protrusion 410 can remain in the state of extending into the engaging recess 420, and the support base 310 and the first canopy bar 320 can both remain relatively fixed relative to the second connecting base 132 and the lower handle frame 120. In the second stage, the upper handle frame 110 applies an external force to the first canopy bar 320, and this external force can drive the support base 310 to rotate so that the engaging protrusion 410 can be separated from the engaging recess 420. Therefore, in this stage, the support base 310 and the first canopy bar 320 can both pivot relative to the second connecting base 132 and the lower handle frame 120, and the first canopy bar 320 can rotate around the rotation axis S1 to move away from or approach the lower handle frame 120.

Referring to FIGS. 9 to 11, in some embodiments, a plurality of engaging recesses 420 are provided, and the plurality of engaging recesses 420 are spaced apart in the circumferential direction around the rotation axis S1. In this embodiment, the plurality of engaging recesses 420 are provided on the support base 310, and the engaging protrusion 410 is provided on the second connecting base 132. In the first stage, the engaging protrusion 410 remains extending into the current engaging recess 420. In the second stage, due to the continuous rotation of the upper handle frame 110, the first canopy bar 320 is continuously subjected to the external force applied by the upper handle frame 110, so that the support base 310 is continuously driven to rotate around the rotation axis S1 relative to the second connecting base 132, as such, the engaging protrusion 410 can be sequentially separated from the current engaging recess 420 and extend into the adjacent engaging recess 420, so as to restrict the continuous rotation of the support base 310 relative to the second connecting base 132. In other words, during the process of the upper handle frame 110 driving the first canopy bar 320 and the support base 310 to rotate (i.e., in the second stage), the engaging protrusion 410 can be continuously separated from one of the plurality of engaging recesses 420 and then enter another adjacent engaging recess 420. As an example, any three adjacent engaging recesses 420 are selected, which are respectively referred to as a first engaging recess 420a, a second engaging recess 420b, and a third engaging recess 420c. The first engaging recess 420a, the second engaging recess 420b, and the third engaging recess 420c are arranged in sequence in the circumferential direction around the rotation axis S1. The engaging protrusion 410 can be separated from the first engaging recess 420a and then extend into the second engaging recess 420b; then, can be further separated from the second engaging recess 420b and extend into the third engaging recess 420c. In this way, the rotation process of the support base 310 exhibits intermittent characteristics, so that the first canopy bar 320 can be relatively slowly approached or away from the lower handle frame 120. In this way, when the canopy mechanism 300 is folded with the handle frame 100, it can be prevented that the first canopy bar 320 violently collides with the lower handle frame 120 when approaching the lower handle frame 120. This can not only prevent the canopy mechanism 300 and the lower handle frame 120 from being worn or deformed, but also effectively prolongs the service life of the stroller 10.

It should be noted that "continuous rotation" means that the process of the support base 310 rotating relative to the second connecting base 132 around the rotation axis S1 is uninterrupted and continuous. In this embodiment, the support base 310 can be intermittently rotated relative to the second connecting base 132 by providing the locking mechanism 400. In other words, under the action of the locking mechanism 400, the rotation of the support base 310 relative to the second connecting base 132 can be discontinuous, or intermittent. In this way, when the canopy mechanism 300 is deployed or collapsed, the canopy mechanism 300 can approach or touch the handle frame 100 in a gentle manner, thereby effectively reducing the impact force generated between the canopy mechanism 300 and the handle frame 100.

In addition, it should be noted that the engaging protrusion 410 may be, for example, a protrusion structure or a bump structure; the engaging recess 420 may be, for example, a groove structure or a through-hole structure, etc., which is not specifically limited herein. Specifically, in this embodiment, the engaging recess 420 is a groove structure.

In this embodiment, when the stroller 10 is in the unfolded state and the canopy mechanism 300 is in the deployed state, if the user needs to fold the canopy mechanism 300, the locking mechanism 400 can be used to restrict the continuous rotation of the support base 310 relative to the second connecting base 132, so as to reduce the impact of the first canopy bar 320 on the upper handle frame 110. In the specific operation, the user directly pushes or pulls the first canopy bar 320 in a direction approaching the second canopy bar 330. In this process, the engaging protrusion 410 can also continuously disengage from one of the plurality of engaging recesses 420 and then enter another adjacent engaging recess 420, so that the support base 310 exhibits the characteristics of intermittent rotation. In this way, the first canopy bar 320 can be relatively slowly approached to the upper handle frame 110, avoiding a violent collision with the upper handle frame 110. It can be seen that in this embodiment, the locking mechanism 400 can not only restrict the rotation of the support base 310 relative to the second connecting base 132, but also restrict the continuous rotation of the support base 310. On the one hand, when the canopy mechanism 300 is folded together with the stroller 10, a violent and rapid collision between the canopy mechanism 300 (specifically, the first canopy bar 320) and the lower handle frame 120 can be effectively avoided; on the other hand, when the stroller 10 is in the unfolded state, if the user switches the canopy mechanism 300 from the deployed state to the collapsed state alone, such a collision between the canopy mechanism 300 (specifically, the first canopy bar 320) and the upper handle frame 110 can also be avoided.

Still referring to FIGS. 9 to 13, in some embodiments, the engaging recess 420 is provided with a guiding inclined surface 421; and/or the engaging protrusion 410 is provided with a guiding inclined surface 411. In other words, in this embodiment, only the engaging recess 420 may be provided with the guiding inclined surface 421; or only the engaging protrusion 410 may be provided with the guiding inclined surface 411; or the engaging recess 420 may be provided with the guiding inclined surface 421, and the engaging protrusion 410 may be provided with the guiding inclined surface 411. When the support base 310 rotates relative to the second connecting base 132, the engaging protrusion 410 pushes against the engaging recess 420 through the guiding inclined surface 421 and/or the guiding inclined surface 411, driving the support base 310 to move in an axial direction of the rotation axis S1 in a direction away from the second connecting base 132 (i.e., in a second direction F2), so that the engaging protrusion 410 is separated from the engaging recess 420. Specifically, in this embodiment, as shown in FIG. 10, a side wall of the engaging recess 420 is provided with the guiding inclined surface 421. More specifically, in a direction in which the support base 310 rotates relative to the second connecting base 132, each of the two opposite side walls of the engaging recess 420 is provided with the guiding inclined surface 421. In this way, no matter the support base 310 rotates clockwise or counterclockwise around the rotation axis S1 relative to the second connecting base 132, the engaging protrusion 410 can be withdrawn from the engaging recess 420 via the guiding inclined surface 421. In other embodiments, as shown in FIG. 11, the engaging protrusion 410 is provided with the guiding inclined surface 411. When the support base 310 rotates relative to the second connecting base 132, the guiding inclined surface 411 can be pushed against by a notch edge of the engaging recess 420, so that the support base 310 moves in the direction away from the second connecting base 132 (i.e., in the second direction F2), thereby enabling the engaging protrusion 410 to be withdrawn from the engaging recess 420.

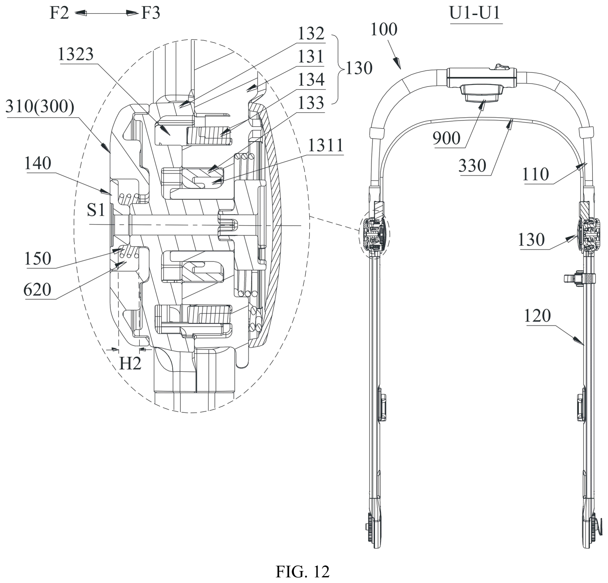

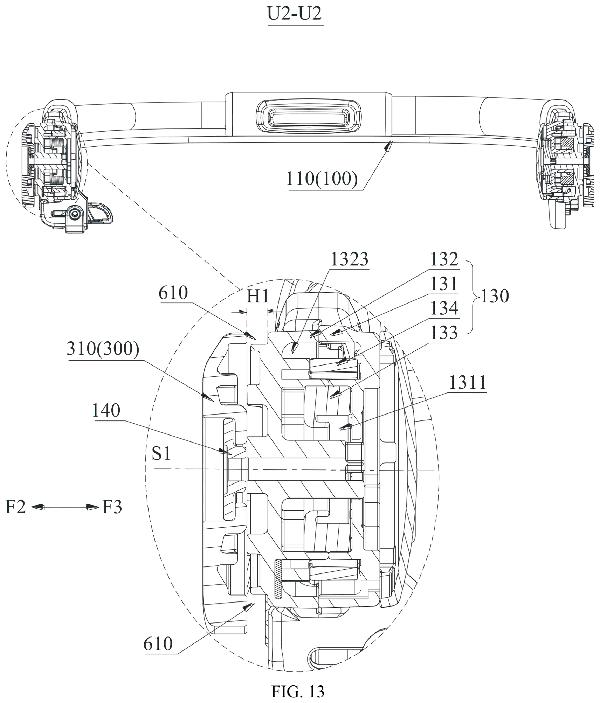

Referring to FIG. 10 to 13, in some embodiments, the position of the support base 310 when the engaging protrusion 410 extends into the engaging recess 420 is called a first position. Due to the pushing effect between the guiding inclined surface 421 and the engaging protrusion 410, the support base 310 can move in the second direction F2 while rotating relative to the second connecting base 132, so that the engaging protrusion 410 is withdrawn from the engaging recess 420. In this case, the position of the support base 310 is called a second position. In other words, when the support base 310 rotates relative to the second connecting base 132, the support base 310 can move in the axial direction of the rotation axis S1, so as to have the first position (see FIG. 12) and the second position (see FIG. 13). Specifically, when the support base 310 is at the first position, the engaging protrusion 410 extends into the engaging recess 420, and the support base 310 and the second connecting base 132 are closely fitted to each other. When the support base 310 is at the second position, the engaging protrusion 410 is separated from the engaging recess 420, and the engaging protrusion 410 pushes against the support base 310, so that a pushing gap 610 is formed between the support base 310 and the second connecting base 132. A width *H1* of the pushing gap 610 in the axial direction of the rotation axis S1 is equal to a length *L1* of the engaging protrusion 410. When the support base 310 rotates relative to the second connecting base 132, the engaging protrusion 410 can be withdrawn from the engaging recess 420 by abutting against the guiding inclined surface 421, so that the support base 310 can be driven to switch from the first position to the second position. As described above, when the upper handle frame 110 pivots relative to the lower handle frame 120 during the unfolding or folding process of the stroller 10, the upper handle frame 110 applies an external force to the first canopy bar 320, so that the first canopy bar 320 has a tendency to rotate around the rotation axis S1. Since the first canopy bar 320 is connected to the support base 310, the support base 310 can synchronously have a tendency to rotate around the rotation axis S1. When the upper handle frame 110 applies an external force to the first canopy bar 320, and the external force is greater than the force required for the engaging protrusion 410 to push against the guiding inclined surface 421 and be thus withdrawn from the engaging recess 420, the support base 310 can rotate relative to the second connecting base 132. Alternatively, when the stroller 10 is in the unfolded state, when the user needs to switch the state of the canopy mechanism 300, the user can directly apply an external force to the first canopy bar 320. Similarly, this external force can cause the first canopy bar 320 and the support base 310 to synchronously rotate around the rotation axis S1 relative to the second connecting base 132. Referring to FIGS. 9, 12 and 13, in some embodiments, the handle frame 100 further includes a cover 140 and a first elastic member 150. The cover 140 is disposed on a side of the support base 310 away from the second connecting base 132 and is connected to the second connecting base 132. Specifically, a movable gap 620 through which the support base 310 moves axially along the rotation axis S1 is formed between the cover 140 and the support base 310. The movable gap 620 is configured to ensure that the support base 310 can move axially along the rotation axis S1. Specifically, the movable gap 620 provides the movement stroke required by the support base 310 to move from the first position to the second position. Specifically, when the support base 310 switches from the first position to the second position, the pushing gap 610 between the support base 310 and the second connecting base 132 can gradually increase, and at the same time, the movable gap 620 between the support base 310 and the cover 140 can gradually decrease. The increase in the width of the pushing gap 610 is equal to the decrease in the width of the movable gap 620. In this embodiment, in the axial direction of the rotation axis S1, the width H2 of the movable gap 620 is greater than the width H1 of the pushing gap 610. The first elastic member 150 can be, for example, an elastic member such as a spring or an elastic sheet. The first elastic member 150 is arranged in the movable gap 620 and abuts between the cover 140 and the support base 310, and is configured to bias the support base 310 towards the first position, so that the support base 310 can remain at the first position. Specifically, during the support base 310 rotating relative to the second connecting base 132, when the engaging protrusion 410 is withdrawn from one of the engaging recesses 420 via the guiding inclined surface 421, the support base 310 is at the second position, and the first elastic member 150 is compressed and deformed to store elastic potential energy. The support base 310 is continuously rotated, and when the engaging protrusion 410 abuts against the region between two adjacent engaging recesses 420, the support base 310 can still remain at the second position. When the support base 310 rotates to the point where the engaging protrusion 410 is opposite to another adjacent engaging recess 420, the first elastic member 150 is reset to push the support base 310 to automatically switch from the second position to the first position, so that the engaging protrusion 410 re-extends into the other engaging recess 420. The direction in which the support base 310 moves from the second position to the first position is defined as a third direction F3, and both the third direction F3 and the second direction F2 are parallel to the axial direction of the rotation axis S1, and the third direction F3 and the second direction F2 are opposite. Specifically, in this embodiment, the second direction F2 points to the outside of the stroller 10 (away from the center of the stroller 10), and the third direction F3 points to the inside of the stroller 10 (approaching the center of the stroller 10).

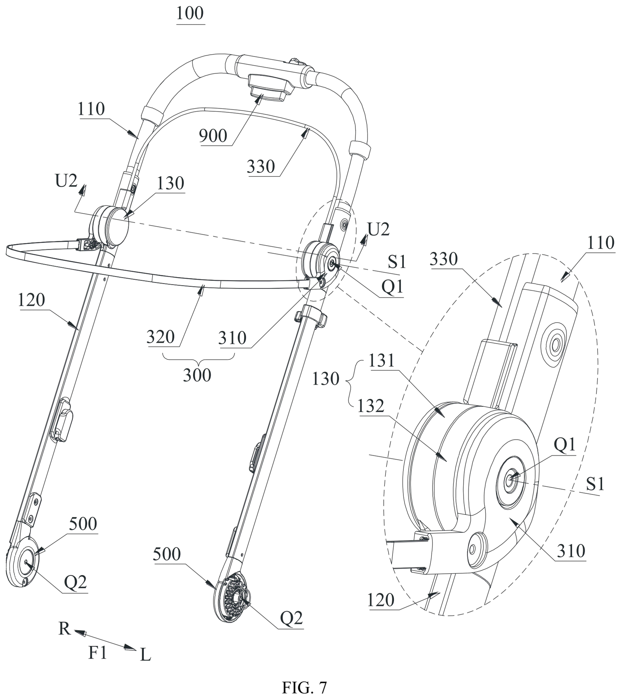

Referring to FIG. 7, in some embodiments, a plurality of the engaging protrusions 410 can be provided, no limitation is made on the number of the engaging protrusions 410, one, two, three, etc. the engaging protrusions 410 can be provided. In this embodiment, two engaging protrusions 410 are provided, and the two engaging protrusions 410 are opposite to each other in the circumferential direction around the rotation axis S1. When the support base 310 is at the first position, the two engaging protrusions 410 can simultaneously extend into the two engaging recesses 420 respectively to achieve the concave-convex fit. For ease of description, the two engaging recesses 420 are referred to as a pair of engaging recesses 420. When the support base 310 rotates relative to the second connecting base 132, the two engaging protrusions 410 can be withdrawn from the corresponding pair of engaging recesses 420, and then extend into another adjacent pair of engaging recesses 420. By arranging the plurality of engaging protrusions 410 to be simultaneously engaged with a plurality of engaging recesses 420, the reliability of the support base 310 when intermittently rotating relative to the second connecting base 132 can be improved.

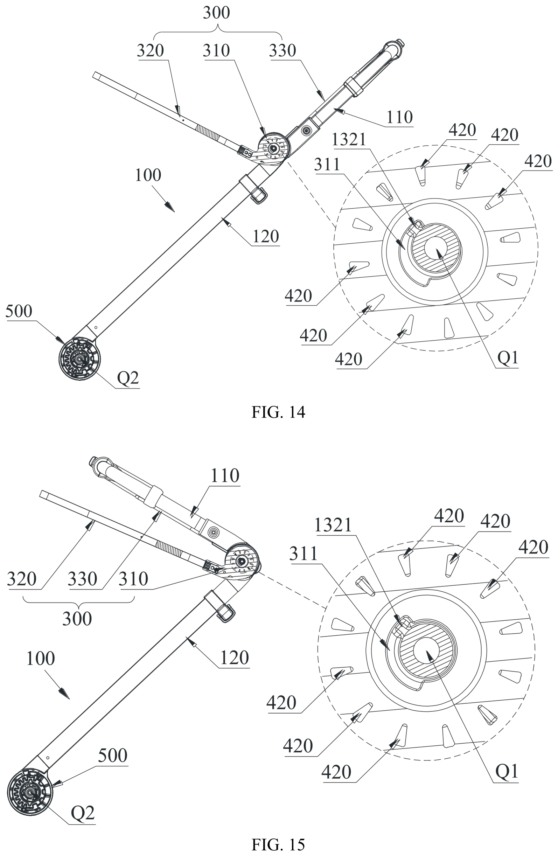

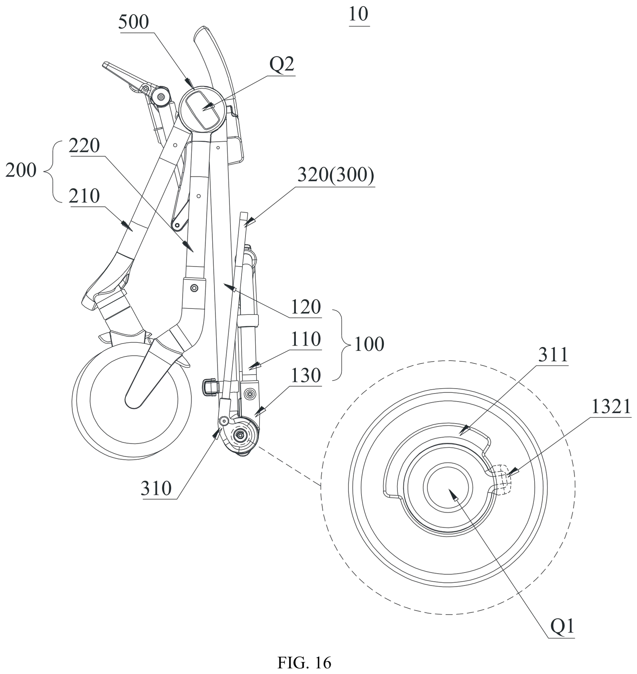

Referring to FIGS. 9 to 11, in some embodiments, one of the support base 310 and the second connecting base 132 is further provided with a limiting rib 1321, and the other of the support base 310 and the second connecting base 132 is provided with a limiting groove 311. The limiting groove 311 is arc-shaped, and the arc center of the limiting groove 311 and the rotation axis S1 is coaxially arranged. In a direction parallel to the rotation axis S1, the limiting rib 1321 can extend into the limiting groove 311. Specifically, the protruding length L2 of the limiting rib 1321 in the direction parallel to the rotation axis is less than the protruding length L1 of the engaging protrusion 410 in the direction parallel to the rotation axis. Therefore, when the engaging protrusion 410 is separated from the engaging recess 420, that is, when the support base 310 is at the second position, the limiting rib 1321 can be separated from the limiting groove 311. In this way, during the rotation of the support base 310 relative to the second connecting base 132, as shown in FIGS. 14 to 16, the limiting rib 1321 does not interfere with the rotation action, and does not limit the rotation range of the support base 310. Therefore, in this embodiment, the arc length of the limiting groove 311 is not specifically limited herein. In other embodiments, it can also be understood that the central angle of the limiting groove 311 is not specifically limited herein, and can be relatively large or small, and which is not specifically limited herein. In this embodiment, the second connecting base 132 is provided with the limiting rib 1321, and the support base 310 is provided with the limiting groove 311. Optionally, in other embodiments, the above-mentioned limiting groove 311 and limiting rib 1321 can also be omitted.

The process and principle of using the canopy mechanism 300 are briefly described below in conjunction with relevant illustrations.

Referring to FIG. 1, when the stroller 10 is in the unfolded state and the canopy mechanism 300 is in the deployed state, the canopy fabric 350 can provide effective shielding and protection for the occupant space below it. In this case, if the user only needs to fold the canopy mechanism 300 (switching from a state shown in FIG. 1 to a state shown in FIG. 5), the user pushes or pulls the first canopy bar 320 clockwise. At this time, the first canopy bar 320 can drive the support base 310 to rotate clockwise around the rotation axis S1 relative to the second connecting base 132. In this process, referring to FIGS. 9 to 11, the engaging protrusion 410 can be separated from the engaging recess 420 in which it is initially engaged, via the guiding inclined surface 421. Subsequently, as the support base 310 is continuously rotated clockwise, the engaging protrusion 410 can sequentially form an instantaneous engagement with the subsequent engaging recess 420, and then quickly disengage from such engaging recess 420, and then enter the next engagement cycle until the first canopy bar 320 is collapsed and abuts against the second canopy bar 330 or the upper handle frame 110. In this process, the support base 310 moves back and forth between the first position and the second position. When the first canopy bar 320 approaches the second canopy bar 330, the canopy mechanism 300 is in the collapsed state, and the support base 310 remains at the first position. It should be noted that the above-mentioned continuous alternating disengagement and engagement mechanism enables the first canopy bar 320 to exhibit intermittent pause motion characteristics during the process of gradually approaching the second canopy bar 330 and the upper handle frame 110. It can be seen that the canopy mechanism 300 exhibits the indexing motion characteristics during state switching.

When the stroller 10 is in the unfolded state and the canopy mechanism 300 is in the collapsed state, if the user needs to unfold the canopy mechanism 300 (switching from the state shown in FIG. 5 to the state shown in FIG. 1), the user can push or pull the first canopy bar 320 counterclockwise. At this time, the first canopy bar 320 can drive the support base 310 to rotate counterclockwise around the rotation axis S1 relative to the second connecting base 132. Similarly, in this process, via the guiding inclined surface 421, the engaging protrusion 410 can be disengaged from the engaging recess 420 in which it is initially engaged. Subsequently, as the support base 310 is continuously rotated counterclockwise, the engaging protrusion 410 can sequentially form an instantaneous engagement with the subsequent engaging recess 420, and then quickly disengage from such engaging recess 420, and then enter the next engagement cycle, until the canopy mechanism 300 is in the deployed state. Similarly, in this process, the support base 310 moves back and forth between the first position and the second position. When the canopy mechanism 300 is in the deployed state, the support base 310 is kept at the first position. Similarly, the above-mentioned continuous alternating disengagement and engagement mechanism enables the first canopy bar 320 to exhibit the intermittent pause motion characteristics during the processes of moving away from and approaching the second canopy bar 330 and the upper handle frame 110. It can be seen that the canopy mechanism 300 exhibits the characteristics of indexing motion during state switching.

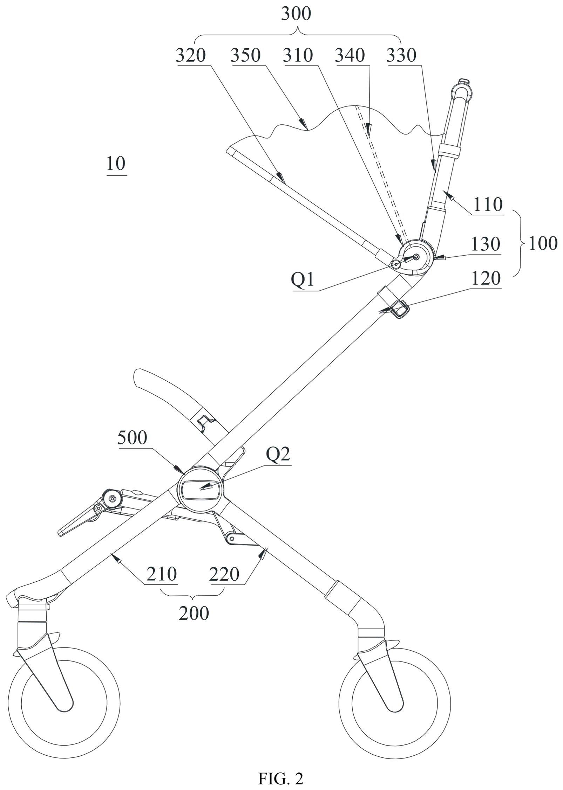

Referring to FIG. 1, when the stroller 10 is in the unfolded state and the canopy mechanism 300 is in the deployed state, if the user needs to fold the stroller 10 (for example, switching from the state shown in FIG. 1 to a state shown in FIG. 2, a state shown in FIG. 3 to a state shown in FIG. 4 in sequence), the upper handle frame 110 can be rotated counterclockwise first, so that the upper handle frame 110 moves to approach the lower handle frame 120 around the first pivot joint 130. Referring to FIGS. 8 and 9, in the first stage of the first connecting base 131 rotating relative to the second connecting base 132, the first canopy bar 320 and the support base 310 are both relatively fixed with respect to the second connecting base 132. At this time, since the second canopy bar 330 and the upper handle frame 110 are arranged on the first connecting base 131, when the upper handle frame 110 rotates relative to the second connecting base 132 by the first connecting base 131, the second canopy bar 330 and the upper handle frame 110 can rotate with the first connecting base 131, and the second canopy bar 330 gradually move closer to the first canopy bar 320. As the distance between the second canopy bar 330 and the first canopy bar 320 reduces, the canopy fabric 350 gradually relaxes due to the gradual decrease in tension, and is finally collapsed between the first canopy bar 320 and the second canopy bar 330. When the canopy mechanism 300 is in the collapsed state (see FIG. 3, which shows the schematic view of the canopy mechanism 300 in a nearly collapsed state), if the upper handle frame 110 is continuously rotated counterclockwise (i.e., in the second stage), under the action of the pushing force, the upper handle frame 110 can push against the first canopy bar 320 to rotate counterclockwise around the rotation axis S1 relative to the second connecting base 132. At the same time, the first canopy bar 320 can drive the support base 310 to rotate counterclockwise around the rotation axis S1 relative to the second connecting base 132. Similarly, in this process, via the guiding inclined surface 421, the engaging protrusion 410 can be disengaged from the engaging recess 420 in which it is initially engaged. Subsequently, as the support base 310 rotates counterclockwise, the engaging protrusion 410 can sequentially form an instantaneous engagement with the subsequent engaging recess 420, and then quickly disengage from such engaging recess 420, and then enter the next engagement cycle, until the first canopy bar 320 is collapsed and abuts against the lower handle frame 120, and the upper handle frame 110 is completely folded relative to the lower handle frame 120. It should be noted that this continuous alternating phenomenon of disengagement and engagement enables the first canopy bar 320 also exhibit intermittent pause motion characteristics during the process of gradually approaching the lower handle frame 120.

Referring to FIG. 4, when the stroller 10 is in the folded state and the canopy mechanism 300 is in the collapsed state, if the user needs to unfold the stroller 10 (switching from the state shown in FIG. 4 to the state shown in FIG. 1), the upper handle frame 110 is pulled, and the upper handle frame 110 can pivot away from the lower handle frame 120 around the first pivot joint 130. Referring to FIGS. 8 and 9, in the first stage of the first connecting base 131 rotating relative to the second connecting base 132, the support base 310 and the first canopy bar 320 are also relatively fixed with respect to the second connecting base 132 first. At this time, since the second canopy bar 330 and the upper handle frame 110 are arranged on the first connecting base 131, when the upper handle frame 110 rotates relative to the second connecting base 132 by the first connecting base 131, the second canopy bar 330 and the upper handle frame 110 can rotate along with the first connecting base 131, and the second canopy bar 330 gradually move away from the first canopy bar 320. As the distance between the second canopy bar 330 and the first canopy bar 320 increases, the originally relaxed canopy fabric 350 is gradually tightened by the tension, and finally fully deployed between the second canopy bar 330 and the first canopy bar 320, forming an effective shielding structure. When the canopy mechanism 300 is in the deployed state, the upper handle frame 110 is continuously rotated clockwise (i.e., in the second stage), and the first canopy bar 320 and the support base 310 can be driven to rotate clockwise around the rotation axis S1 relative to the second connecting base 132 under the linkage action of the canopy fabric 350 until the upper handle frame 110 and the lower handle frame 120 reach a fully unfolded state. Similarly, during this rotation process, the rotation of the support base 310 driven by the first canopy bar 320 is not continuous and smooth, and also exhibits intermittent pause motion characteristics.

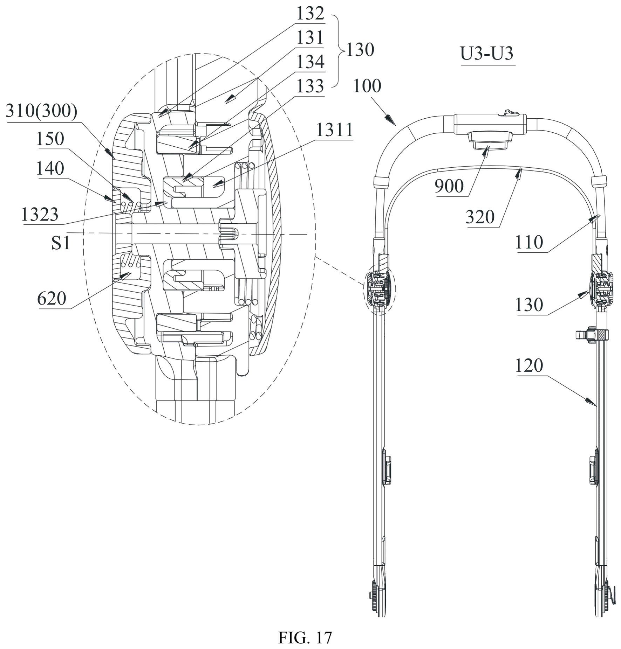

Referring to FIGS. 9 and 17, in some embodiments, the first pivot joint 130 further includes a locking member 133. The locking member 133 is movably disposed between the first connecting base 131 and the second connecting base 132 in the axial direction to restrict the first connecting base 131 and the second connecting base 132 from pivoting relative to each other or allow the first connecting base 131 and the second connecting base 132 to pivot relative to each other. In this embodiment, a side of the first connecting base 131 facing the second connecting base 132 is provided with a first cavity 1311 and a first locking groove 1312 disposed in the first cavity 1311. A side of the second connecting base 132 facing the first connecting base 131 is provided with a second cavity 1323 and a second locking groove (not shown) disposed in the second cavity 1323. The locking member 133 is of a gear structure having locking teeth 1331. The locking member 133 is movably disposed between the first cavity 1311 and the second cavity 1323 in the axial direction and has a locked position and an unlocked position. When the locking member 133 is at the locked position, an end of the locking member 133 in the axial direction is located in the first cavity 1311, and another end of the locking member 133 in the axial direction is located in the second cavity 1323. In this way, the locking teeth 1331 outside the locking member 133 are simultaneously engaged with the first locking groove 1312 and the second locking groove in the axial direction to restrict the first connecting base 131 from pivoting relative to the second connecting base 132. When the locking member 133 is at the unlocked position, the locking member 133 can be completely moved into the first cavity 1311 or the second cavity 1323, and the locking teeth 1331 can be correspondingly withdrawn from the second locking groove or the first locking groove 1312 to allow the first connecting base 131 to pivot relative to the second connecting base 132. In this embodiment, when the locking member 133 is at the unlocked position, the locking teeth 1331 of the locking member 133 are withdrawn from the first locking groove 1312, and the locking member 133 is completely moved into the second cavity 1323. Based on this, when the stroller 10 needs to be folded, the user needs to first unlock the first pivot joint 130 to allow the locking member 133 to completely move into the second cavity 1323.

Referring to FIGS. 9 and 17, in some embodiments, the first pivot joint 130 further includes a driving member 134. The driving member 134 is axially and rotatably disposed between the first connecting base 131 and the locking member 133. Specifically, the locking member 133 is provided with a driving portion 1332, and the driving member 134 is provided with a driving inclined surface (not shown). The driving inclined surface extends obliquely in the circumferential direction of the driving member 134. The driving inclined surface and the driving portion 1332 axially abut against each other. When the driving member 134 rotates, the driving member 134 can push against the driving portion 1332 by the driving inclined surface to axially move the locking member 133 from the locked position to the unlocked position.

Referring to FIGS. 8 and 9, in some embodiments, the stroller 10 further has an unlocking operating mechanism 900. The unlocking operating mechanism 900 can cooperate with the driving member 134 in the first pivot joint 130. When being operated, the unlocking operating mechanism 900 can drive the driving member 134 to rotate, thereby driving the locking member 133 to move to the unlocked position.

A second embodiment of the present application further provides another stroller 10, which is similar to the first embodiment and includes a handle frame 100, a wheel frame 200, a canopy mechanism 300, a locking mechanism 400, etc. The stroller 10 of this embodiment can be regarded as a variant of the stroller 10 of the first embodiment. In the absence of conflict, the configurations of the components and the connection relationships between the components in this embodiment can refer to the description of those in the first embodiment as above. Therefore, when the configurations, connection relationships, etc. of the same components as those in the first embodiment are mentioned in this embodiment, the related figures can refer to the corresponding figures for the first embodiment. The following mainly describes the differences between this embodiment and the first embodiment.

This embodiment is different from the first embodiment in at least the following aspects.

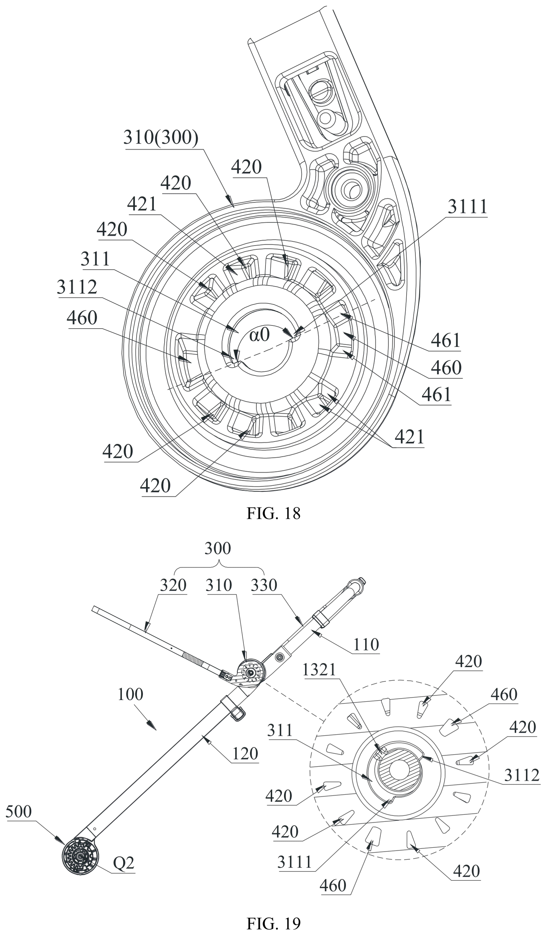

The configuration of the locking mechanism 400 in this embodiment is slightly different from that of the locking mechanism 400 in the first embodiment, and the configuration of the support base 310 is also slightly different from that of the support base 310 in the first embodiment. Specifically, the second connecting base 132 is also provided with a limiting rib 1321, and the support base 310 is also provided with a limiting groove 311. However, in this embodiment, referring to FIG. 11, the protruding length L2 of the limiting rib 1321 in the direction parallel to the rotation axis S1 is greater than the protruding length L1 of the engaging protrusion 410 in the direction parallel to the rotation axis S1. Therefore, whether the support base 310 is at the first position or the second position, that is, whether the engaging protrusion 410 extends into or is separated from the engaging recess 420, the limiting rib 1321 can extend into the limiting groove 311 in the direction parallel to the rotation axis S1. In this way, two ends of the limiting groove 311 (referred to as a first end 3111 and a second end 3112, respectively) can limit the rotation stroke of the support base 310 relative to the second connecting base 132. In other words, the central angle α0 of the limiting groove 311 defines the rotation range of the support base 310 relative to the second connecting base 132. As shown in FIG. 19, when the support base 310 rotates clockwise relative to the second connecting base 132 so that the limiting rib 1321 is located at the first end 3111 of the limiting groove 311, the support base 310 cannot continue to rotate clockwise. Similarly, when the support base 310 rotates counterclockwise relative to the second connecting base 132 so that the limiting rib 1321 is located at the second end 3112 of the limiting groove 311, the support base 310 cannot continue to rotate counterclockwise.

Referring to FIGS. 18 and 19, in some embodiments, the dimension of the limiting groove 311 in the circumferential direction around the rotation axis S1 is greater than the dimension of the limiting groove 311 in the circumferential direction around the rotation axis S1 in the first embodiment. In this embodiment, the central angle α0 of the limiting groove 311 is approximately 180°. When the stroller 10 is in the unfolded state and the canopy mechanism 300 is in the deployed state, the limiting rib 1321 is located in the middle of the limiting groove 311 in an arc length direction of the limiting groove 311. When the first canopy bar 320 and the upper handle frame 110 approach each other so that the canopy mechanism 300 is in the collapsed state, the limiting rib 1321 is located at the first end 3111 of the limiting groove 311. After the stroller 10 is folded such that the canopy mechanism 300 is driven to fold synchronously and collapse towards the lower handle frame 120, the limiting rib 1321 is located at the second end 3112 of the limiting groove 311. In other embodiments, the central angle α0 of the limiting groove 311 may also be greater than or less than 180°, and which is not specifically limited herein.

Referring to FIG. 18, in some embodiments, one of the support base 310 and the second connecting base 132 having the engaging recess 420 is further provided with a locking recess 460. The locking recess 460 is adapted to be in a locking fit with the engaging protrusion 410. Specifically, in this embodiment, the second connecting base 132 is provided with two locking recesses 460. The two locking recesses 460 are opposite to each other in the circumferential direction around the rotation axis S1, and the two locking recesses 460 respectively face the first end 3111 and the second end 3112 of the limiting groove 311 in the radial direction of the rotation axis S1. Referring to FIGS. 18 and 19, in this way, when the handle frame 100 is kept unfolded, when the first canopy bar 320 is rotated to approach the upper handle frame 110 to cause the canopy mechanism 300 to be in the collapsed state, the limiting rib 1321 is exactly located at the first end 3111 of the limiting groove 311, and the two engaging protrusions 410 are exactly locked and fitted with the two locking recesses 460, thereby ensuring that the canopy mechanism 300 can be firmly kept in the collapsed state. When the canopy mechanism 300 is synchronously in the collapsed state along with the folding of the stroller 10, the limiting rib 1321 is exactly located at the second end 3112 of the limiting groove 311, and the two engaging protrusions 410 can also be locked and fitted with the two locking recesses 460 respectively, so that the canopy mechanism 300 can be firmly kept in the collapsed state. Specifically, the dimension of the locking recess 460 in the circumferential direction around the rotation axis S1 is different from the dimension of the engaging recess 420 in the circumferential direction around the rotation axis S1. More specifically, the dimension of the locking recess 460 in the circumferential direction around the rotation axis S1 is greater than the dimension of the engaging recess 420 in the circumferential direction around the rotation axis S1. In this way, the engaging protrusion 410 can be completely accommodated in the locking recess 460, so that when the canopy mechanism 300 is in the collapsed state, the support base 310 and the second connecting base 132 can be closely fitted to each other, and there is no pushing gap 610 between the support base 310 and the second connecting base 132, thereby preventing debris from entering the pushing gap 610. Meanwhile, it can also ensure that the engaging protrusion 410 is stably inserted into the locking recess 460, thereby improving the stability of the canopy mechanism 300 in the collapsed state.

Referring to FIG. 18, in some embodiments, the locking recess 460 is provided with a sliding inclined surface 461; and/or the engaging protrusion 410 is provided with a sliding inclined surface 412. In other words, in this embodiment, only the locking recess 460 may be provided with the sliding inclined surface 461; or only the engaging protrusion 410 may be provided with the sliding inclined surface 412; or, the locking recess 460 may be provided with the sliding inclined surface 461, and the engaging protrusion 410 may be provided with the sliding inclined surface 412. When the support base 310 rotates relative to the second connecting base 132, the engaging protrusion 410 pushes against the locking recess 460 by the sliding inclined surface 461 and/or the sliding inclined surface 412, so that the engaging protrusion 410 is separated from the locking recess 460. Specifically, in this embodiment, the side wall of the locking recess 460 is provided with the sliding inclined surface 461. When the support base 310 rotates relative to the second connecting base 132, the engaging protrusion 410 can be withdrawn from the locking recess 460 via the sliding inclined surface 461.

It should be noted that, optionally, the support base 310 in the first embodiment may also be provided with a locking recess 460, which is not specifically limited herein.

A third embodiment of the present application further provides another stroller 10, which is similar to the first embodiment and includes a handle frame 100, a wheel frame 200, a canopy mechanism 300, a locking mechanism 400, etc. The stroller 10 of this embodiment can be regarded as a variant of the stroller 10 of the first embodiment. In the absence of conflict, the configurations of the components and the connection relationships between the components in this embodiment can refer to the description of those of the first embodiment as above. The following mainly describes the differences between this embodiment and the first embodiment.

This embodiment is different from the first embodiment in at least the following aspects.

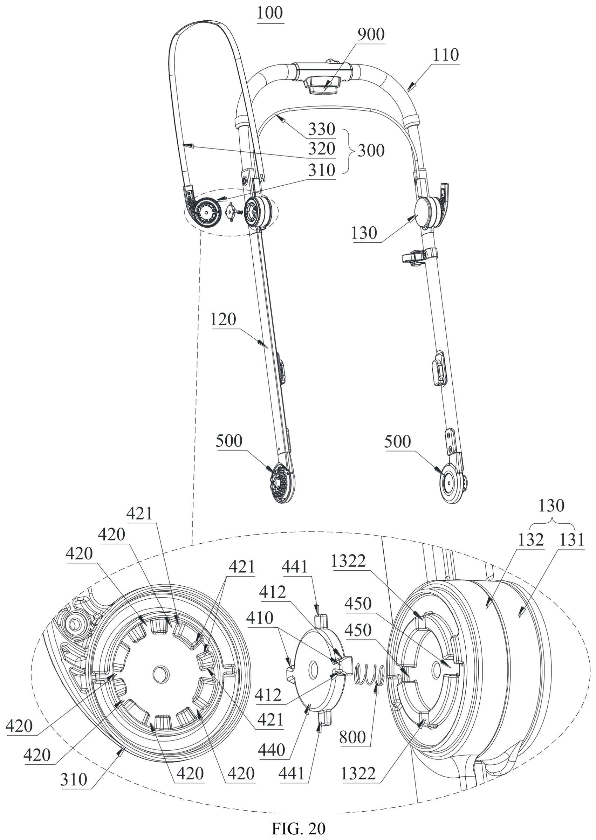

In this embodiment, the configuration of the locking mechanism 400 is different from that of the locking mechanism 400 in the first embodiment, and the configuration of the second connecting base 132 is also different from that of the second connecting base 132 in the first embodiment. Specifically, referring to FIG. 20, in this embodiment, the locking mechanism 400 includes a bracket 440, an engaging protrusion 410, and a plurality of engaging recesses 420. The bracket 440 is arranged between the second connecting base 132 and the support base 310 and is movable in the axial direction of the rotation axis S1. The bracket 440 is restricted from rotating relative to the second connecting base 132. One of the support base 310 and the bracket 440 is provided with the engaging recesses 420, and the other of the support base 310 and the bracket 440 is provided with the engaging protrusion 410. Similarly, when the engaging protrusion 410 extends into the engaging recess 420, the support base 310 is restricted from rotating relative to the second connecting base 132. When the engaging protrusion 410 is separated from the engaging recess 420, the support base 310 is allowed to rotate relative to the second connecting base 132.

Similarly, in this embodiment, as shown in FIG. 20, the plurality of engaging recesses 420 are provided, and the plurality of engaging recesses 420 are spaced apart in the circumferential direction around the rotation axis S1. In the first stage of the upper handle frame 110 rotating relative to the lower handle frame 120, the engaging protrusion 410 remains extending into the current engaging recess 420. In the second stage, similarly, the engaging protrusion 410 can be sequentially separated from the current engaging recess 420 and extend into the adjacent engaging recess 420 to restrict the continuous rotation of the support base 310 relative to the second connecting base 132.

Still referring to FIG. 20, in some embodiments, one of the second connecting base 132 and the bracket 440 is provided with a limiting protrusion 441, and the other of the second connecting base 132 and the bracket 440 is provided with a limiting recess 1322. The limiting protrusion 441 can be engaged with the limiting recess 1322. In this way, the bracket 440 can be restricted from rotating relative to the second connecting base 132. In some embodiments, at least one limiting protrusion 441 is provided, and the number of the limiting protrusion 441 is the same as the number of the limiting recess 1322. When a plurality of limiting protrusions 441 are provided, the plurality of limiting protrusions 441 are spaced apart in the circumferential direction around the rotation axis S1. In this way, the rotation constraint between the bracket 440 and the second connecting base 132 can be enhanced. Specifically, in this embodiment, the bracket 440 is arranged between the support base 310 and the second connecting base 132; and the bracket 440, the second connecting base 132 and the support base 310 are coaxially arranged. In this embodiment, the support base 310 is provided with the plurality of engaging recesses 420, the bracket 440 is provided with the engaging protrusion 410 and the limiting protrusion 441, and the second connecting base 132 is provided with the limiting recess 1322.

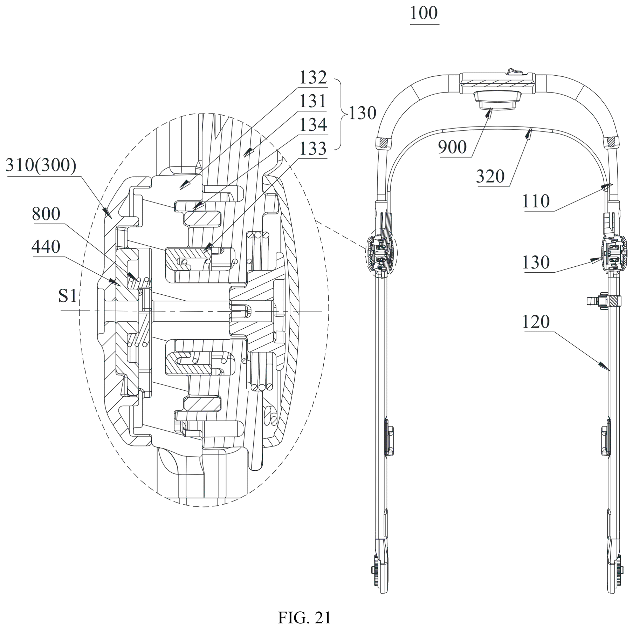

Referring to FIGS. 20 and 21, in some embodiments, the bracket 440 has a third position and a fourth position between the support base 310 and the second connecting base 132. In addition, the second connecting base 132 is further provided with a positioning recess 450. When the bracket 440 is at the third position, the engaging protrusion 410 is engaged with the engaging recess 420 and the positioning recess 450 at the same time, so that the rotation of the support base 310 relative to the second connecting base 132 can be further restricted. When the bracket 440 is at the fourth position, the engaging protrusion 410 is engaged with the positioning recess 450 and is disengaged from the engaging recess 420, so that the support base 310 can be allowed to rotate relative to the second connecting base 132. Similarly, in this embodiment, the engaging recess 420 is provided with a guiding inclined surface 421; and/or the engaging protrusion 410 is provided with a guiding inclined surface 411. Therefore, when the support base 310 rotates relative to the second connecting base 132, the engaging protrusion 410 can push against the engaging recess 420 by the guiding inclined surface 421 and/or the guiding inclined surface 411, thereby driving the bracket 440 to automatically switch from the third position to the fourth position.

It should be noted that, in other embodiments, when the bracket 440 is at the third position, the engaging protrusion 410 is engaged with the engaging recess 420 and the positioning recess 450 at the same time, the above-mentioned limiting protrusion 441 and the limiting recess 1322 can be omitted, so that the bracket 440 can also be restricted from rotating relative to the second connecting base 132.In other embodiments, in the case of providing the limiting protrusion 441 and the limiting recess 1322, when the bracket 440 is at the third position, the engaging protrusion 410 can also only engage with the engaging recess 420 without engaging with the positioning recess 450. In this way, the bracket 440 can still be restricted from rotating around the second connecting base 132.

Still referring to FIGS. 20 and 21, in some embodiments, a second elastic member 800 is arranged between the bracket 440 and the second connecting base 132. The second elastic member 800 can be, for example, an elastic member such as a spring or an elastic sheet. Specifically, the second elastic member 800 is abutted between the bracket 440 and the second connecting base 132, and configured to bias the bracket 440 towards the third position, so that the bracket 440 can remain at the third position. During the support base 310 rotating relative to the second connecting base 132, when the engaging protrusion 410 is withdrawn from one of the engaging recesses 420 via the guiding inclined surface 421, the bracket 440 is at the fourth position, and the second elastic member 800 is compressed and deformed to store elastic potential energy. The support base 310 is continued to rotated, when the engaging protrusion 410 abuts against the region between two adjacent engaging recesses 420, the bracket 440 can still remain at the fourth position. When the support base 310 rotates until the engaging protrusion 410 faces another adjacent engaging recess 420, the second elastic member 800 is reset to push the bracket 440 to automatically switch from the fourth position to the third position, so that the engaging protrusion 410 re-extends into another engaging recess 420.

In this embodiment, when the support base 310 rotates relative to the second connecting base 132, the support base 310 and the second connecting base 132 always maintain a relatively fixed state in the axial direction of the rotation axis S1. In this way, no gap can be formed between the support base 310 and the second connecting base 132 due to the rotation, so that debris can be effectively prevented from accidentally falling between the support base 310 and the second connecting base 132, which can not only avoid adverse effects on the rotation reliability of the support base 310, but also help to increase the service life of the support base 310.

A fourth embodiment of the present application further provides another stroller 10, which is similar to the third embodiment and includes a handle frame 100, a wheel frame 200, a canopy mechanism 300, a locking mechanism 400, etc. The stroller 10 of this embodiment can be regarded as a variant of the stroller 10 of the third embodiment. In the absence of conflict, the configurations of the components and the connection relationships between the components in this embodiment can refer to the description of those in the third embodiment as above. The following mainly describes the differences between this embodiment and the third embodiment as above.

This embodiment is different from the third embodiment in at least the following aspects.

Some of the components of the handle frame 100 in this embodiment are different from those of the handle frame 100 in the third embodiment. Specifically, in this embodiment, the handle frame 100 further includes a locking retaining mechanism 700. The locking retaining mechanism 700 can be configured to stably keep the handle frame 100 in a folded state.

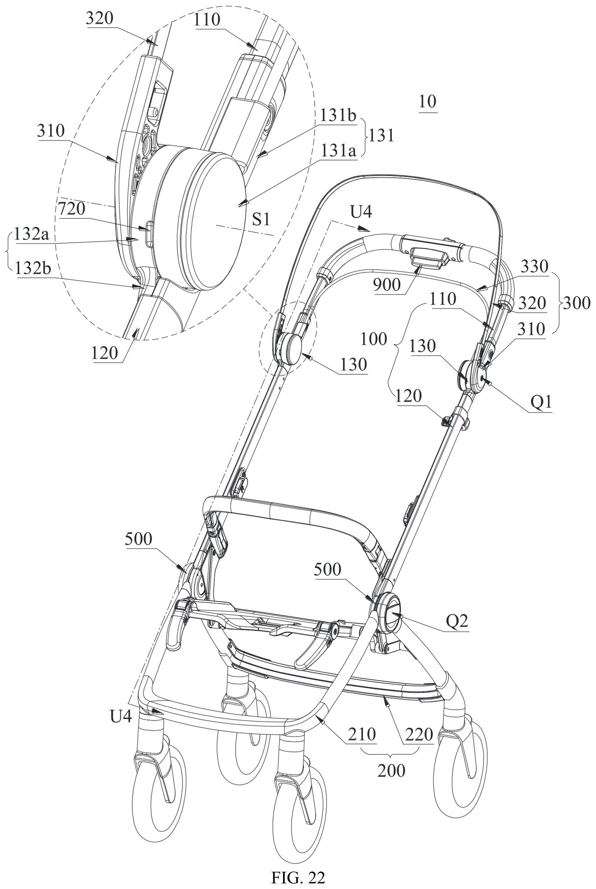

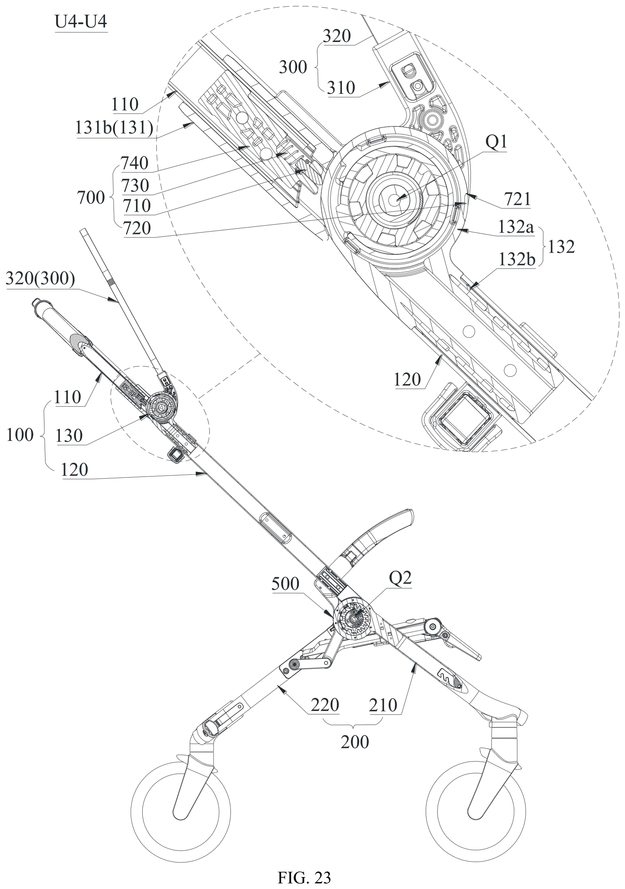

Referring to FIGS. 22 and 23, in some embodiments, the first connecting base 131 includes a first pivoting portion 131a and a first connecting portion 131b connected to each other. The first connecting portion 131b is of a strip-shaped tubular structure. The upper handle frame 110 is of a U-shaped tubular structure. The first connecting portion 131b is sleeved on the outside of a tube body of the upper handle frame 110 and connected to the upper handle frame 110. An inner cavity of the first connecting portion 131b is in communication with the inner cavity of the upper handle frame 110. The second connecting base 132 includes a second pivoting portion 132a and a second connecting portion 132b connected to each other. The second connecting portion 132b is connected to the lower handle frame 120. The second pivoting portion 132a and the first pivoting portion 131a rotate around the first pivot point Q1.

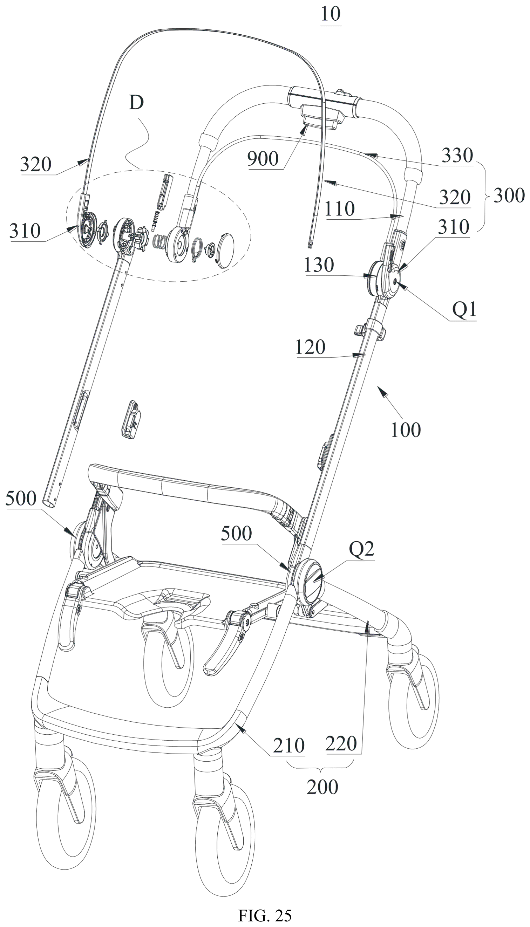

Referring to FIGS. 23 to 26, in some embodiments, the locking retaining mechanism 700 includes a retaining member 710 and a retaining recess 720. One of the retaining member 710 and the retaining recess 720 is arranged on the upper handle frame 110, and the other of the retaining member 710 and the retaining recess 720 is arranged on the second connecting base 132. Specifically, in this embodiment, the retaining member 710 is movably provided in the upper handle frame 110 and has a locked position and an unlocked position. The outer periphery of the second pivoting portion 132a of the second connecting base 132 is provided with the retaining recess 720. In this embodiment, the position of the upper handle frame 110 when the upper handle frame 110 and the lower handle frame 120 are kept in a relatively folded state is referred to as a folded position. Specifically, when the upper handle frame 110 is in the folded position, the retaining member 710 faces the retaining recess 720, and the retaining member 710 can move to the locked position to extend into the retaining recess 720. In this way, the first connecting base 131 can be restricted from rotating relative to the second connecting base 132, and further, the upper handle frame 110 can be restricted from rotating relative to the lower handle frame 120, so that the upper handle frame 110 and the lower handle frame 120 are kept in a relatively folded state.

Still referring to FIGS. 23 to 26, in some embodiments, the locking retaining mechanism 700 further includes a third elastic member 730. The third elastic member 730 can be, for example, an elastic member such as a spring or an elastic sheet. The third elastic member 730 is arranged in the upper handle frame 110 and abuts against the retaining member 710, and configured to bias the retaining member 710 towards the locked position, so that the retaining member 710 can remain at the locked position. When the upper handle frame 110 is in any position other than the folded position, the retaining member 710 can abut against the outer peripheral wall of the second pivoting portion 132a, and at this time, the third elastic member 730 is compressed and deformed to store elastic potential energy. When the upper handle frame 110 rotates to the folded position, the retaining member 710 faces the retaining recess 720, and the third elastic member 730 is automatically reset to push the retaining member 710 to be automatically inserted into the retaining recess 720. Specifically, in this embodiment, the locking retaining mechanism 700 further includes a mounting bracket 740. The mounting bracket 740 is arranged on the upper handle frame 110, and the retaining member 710 is movably arranged on the mounting bracket 740 to switch between the locked position and the unlocked position. Specifically, the third elastic member 730 abuts between the retaining member 710 and the mounting bracket 740. It should be noted that in other embodiments, the mounting bracket 740 may also be omitted, and the third elastic member 730 directly abuts between the retaining member 710 and an inner wall or a convex body (not shown) inside the upper handle frame 110, which is not specifically limited herein.

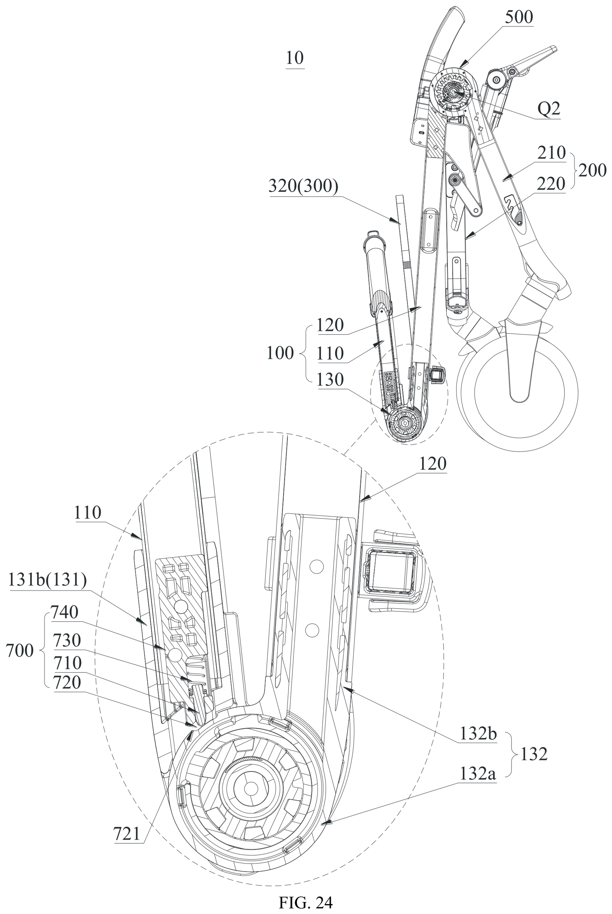

Referring to FIGS. 23 and 24, in some embodiments, a side wall of the retaining recess 720 is formed with a guiding inclined surface 721. When the upper handle frame 110 pivots relative to the lower handle frame 120 to unfold, the guiding inclined surface 721 is configured to guide the retaining member 710 to withdrawn from the retaining recess 720.

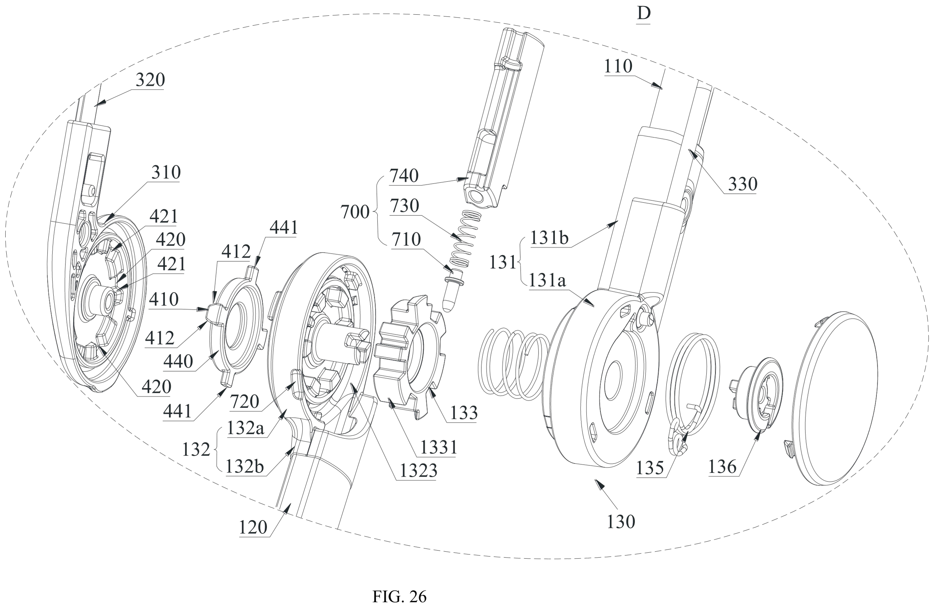

Referring to FIG. 26, in this embodiment, the first pivot joint 130 further includes a fourth elastic member 135 and a fixing member 136. The fixing member 136 is arranged on a side of the first connecting base 131 away from the second connecting base 132 and is fixedly connected to the second connecting base 132. In this way, the first connecting base 131 and the second connecting base 132 can be restricted from being separated from each other axially during the pivoting process. Specifically, the fourth elastic member 135 can be, for example, a torsion spring, which abuts between the fixing member 136 and the first connecting base 131. When the upper handle frame 110 is in the folded position, the torsion spring is in a natural state. When the upper handle frame 110 pivots relative to the lower handle frame 120 to unfold, the torsion spring is in a torsion state. Therefore, when the locking member 133 is at the unlocked position (for example, the stroller 10 is in the unfolded state), the upper handle frame 110 can pivot relative to the lower handle frame 120. At this time, the torsion spring is reset to drive the first connecting base 131 to rotate relative to the second connecting base 132, so that the upper handle frame 110 has a tendency to pivot in a direction approaching the lower handle frame 120, thereby facilitating the upper handle frame 110 to pivot and fold relative to the lower handle frame 120. It should be noted that in other embodiments, the fourth elastic member 135 and the fixing member 136 can also be omitted, and which is not specifically limited herein.

It should be noted that, optionally, the handle frames 100 in the first embodiment and the second embodiment may also be provided with the locking retaining mechanism 700. In addition, the first pivot joints 130 in the first embodiment and the second embodiment may also include the fourth elastic member 135 and the fixing member 136, which are not specifically limited herein.

A fifth embodiment of the present application further provides another stroller 10, which is similar to the fourth embodiment and includes a handle frame 100, a wheel frame 200, a canopy mechanism 300, a locking mechanism 400, and a locking retaining mechanism 700, etc. The stroller 10 of this embodiment can be regarded as a variant of the stroller 10 of the fourth embodiment. In the absence of conflict, the configurations of the components and the connection relationships between the components in this embodiment can refer to the description of those in the fourth embodiment as above. The following mainly describes the differences between this embodiment and the fourth embodiment above.

This embodiment is different from the fourth embodiment in at least the following aspects.

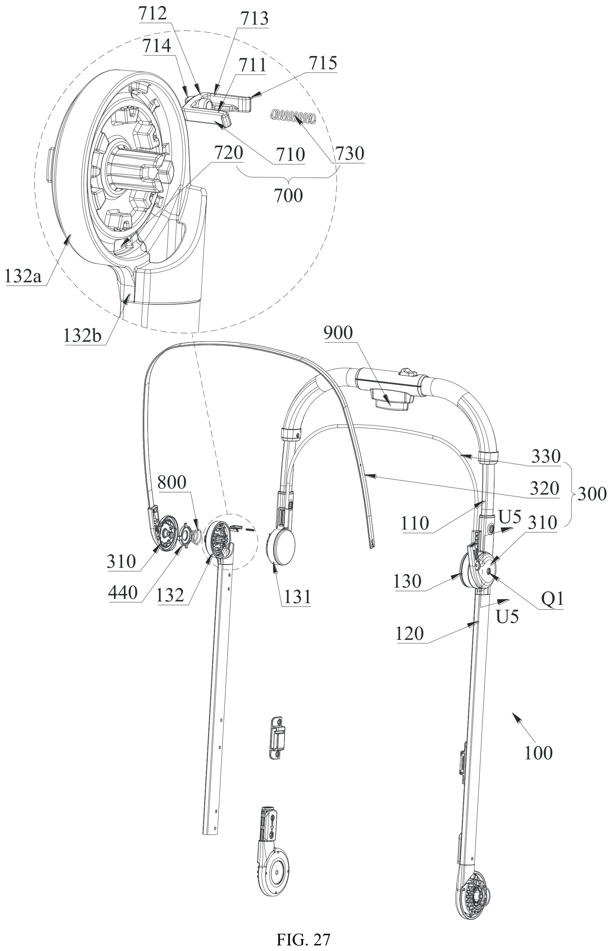

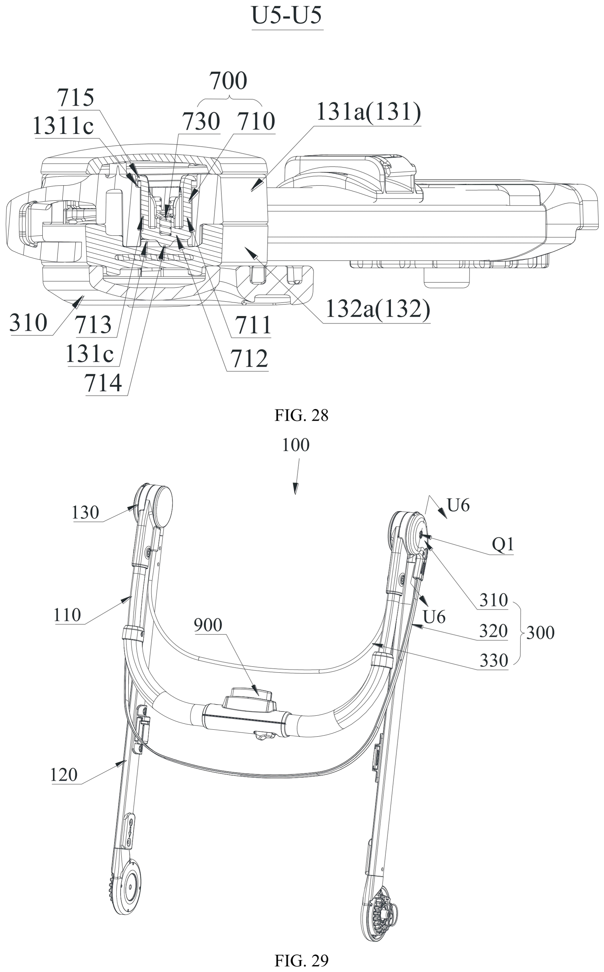

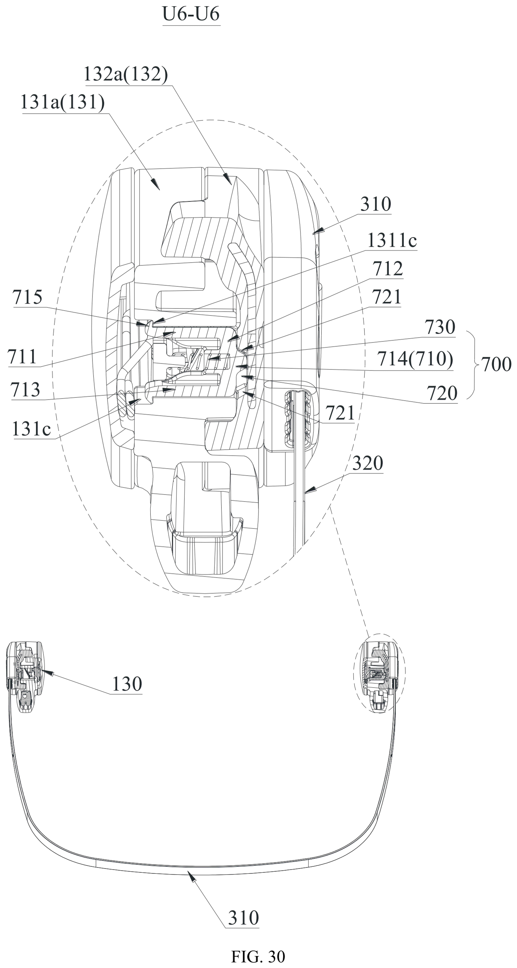

The configurations and arrangement positions of some of the components of the locking retaining mechanism 700 in this embodiment are different from those of the locking retaining mechanism 700 in the fourth embodiment. Referring to FIGS. 27 and 28, in this embodiment, the retaining member 710 is movably arranged on the first pivoting portion 131a of the first connecting base 131, and the retaining recess 720 is arranged inside the second pivoting portion 132a of the second connecting base 132. Specifically, the retaining member 710 is movably arranged on a side of the first pivoting portion 131a facing the second pivoting portion 132a, the retaining recess 720 is arranged on a side of the second pivoting portion 132a facing the first pivoting portion 131a, and the third elastic member 730 abuts between the retaining member 720 and the first pivoting portion 131a. When the upper handle frame 110 and the lower handle frame 120 are kept unfolded relative to each other, the retaining member 720 is abutted between the first pivoting portion 131a and the second pivoting portion 132a and is kept at the unlocked position, and the third elastic member 730 is kept in a compressed state. Referring to FIGS. 29 and 30, when the upper handle frame 110 rotates to the folded position relative to the second connecting base 132 along with the first connecting base 131, the retaining member 710 faces the retaining recess 720, and the retaining member 710 is pushed to the locked position under the restoring force of the third elastic member 730, to be inserted into the retaining recess 720. In this way, the upper handle frame 110 and the lower handle frame 120 are locked, and the upper handle frame 110 is restricted from pivoting relative to the lower handle frame 120 to unfold. In this embodiment, the locking retaining mechanism 700 is disposed inside the first pivot joint 130, which can improve the stability of the retaining member 710 locked in the retaining recess 720. In addition, the wear problem of the retaining member 710 on the outside of the first pivot joint 130 (specifically, the second pivoting portion 132a) can also be improved.

In some embodiments, referring to FIG. 27, the retaining member 710 is of a U-shaped structure. The retaining member 710 includes a first rod 711, a second rod 712 and a third rod 713 that are connected to each other in sequence. The second rod 711 is provided with a lock head 714. The lock head 714 is configured to be inserted into or withdrawn from the retaining recess 720. When the retaining member 710 is at the locked position, the lock head 714 is inserted into the retaining recess 720. When the retaining member 710 is at the unlocked position, the lock head 714 is withdrawn from the retaining recess 720. Referring to FIGS. 27, 28 and 30, the first pivoting portion 131a is provided with a moving channel 131c. The moving channel 131c extends towards the second pivoting portion 132a. The retaining member 710 can move in the moving channel 131c to be switchable between the locked position and the unlocked position. Specifically, the side wall of the moving channel 131c forms a limiting step 1311c. An end of the first rod 711 away from the second rod 712 and an end of the third rod 713 away from the second rod 712 are bent outwardly to form an engaging lug 715. When the retaining member 710 is at the unlocked position, there is a gap between the engaging lug 715 and the limiting step 1311c. When the retaining member 710 is at the locked position, the limiting step 1311c abuts against the engaging lug 715 to form a limiting fit.

It should be noted that, in this embodiment, the first pivot joint 130 may also include the fourth elastic member 135 and the fixing member 136. In other embodiments, the fourth elastic member 135 and the fixing member 136 may also be omitted, and which is not specifically limited herein.

The stroller 10 in the above embodiment has the following technical effects:

The present application realizes the mechanical coupling between the appearance change of the stroller 10 and the motion of the canopy mechanism 300 by configuring the canopy mechanism 300 to be pivotable around the lower handle frame 120 and to be disposed in linkage with the upper handle frame 110. Specifically, when the user operates the handle frame 100 to fold or unfold the entire stroller 10, the pivotal movement of the upper handle frame 110 relative to the lower handle frame 120 directly drives the canopy mechanism 300 to perform a synchronous collapsing or deploying motion through mechanical linkage, forming an operation effect of "one action and two responses", simplifying the cumbersome process of the conventional stroller 10 that requires step-by-step operation. Specifically, in the present application, the upper handle frame 110 is in linkage with the canopy mechanism 300. When the stroller 10 switches from the unfolded state to the folded state, in the early stage when the upper handle frame 110 rotates relative to the lower handle frame 120 to approach the lower handle frame 120, the canopy mechanism 300 can be collapsed as the upper handle frame 110 rotates. In the later stage when the upper handle frame 110 rotates relative to the lower handle frame 120 to approach the lower handle frame 120, the upper handle frame 110 applies an external force to the canopy mechanism 300 in the collapsed state to drive the locking mechanism 400 to be unlocked (that is, the continuous pivoting of the upper handle frame 110 relative to the lower handle frame 120 can drive the locking mechanism 400 to be unlocked), thereby driving the canopy mechanism 300 to rotate relative to the lower handle frame 120 and approach the lower handle frame 120, so that the stroller 10 is folded. Conversely, when the stroller 10 switches from the folded state to the unfolded state, in the early stage when the upper handle frame 110 rotates relative to the lower handle frame 120 to move away from the lower handle frame 120, the upper handle frame 110 can drive the canopy mechanism 300 to be deployed. Specifically, the second canopy bar 330 rotates with the upper handle frame 110, the first canopy bar 320 remains stationary, so that the canopy fabric 350 is gradually deployed until the entire canopy mechanism 300 is in the deployed state. In the later stage when the upper handle frame 110 rotates relative to the lower handle frame 120 to move away from the lower handle frame 120, the upper handle frame 110 applies an external force to the canopy mechanism 300 in the deployed state to drive the locking mechanism 400 to be unlocked (that is, the continuous pivoting of the upper handle frame 110 relative to the lower handle frame 120 can drive the locking mechanism 400 to be unlocked), thereby driving the canopy mechanism 300 in the deployed state to rotate relative to the lower handle frame 120 and move away from the lower handle frame 120, so that the stroller 10 can be unfolded. In the present application, when the upper handle frame 110 rotates relative to the lower handle frame 120, the canopy mechanism 300 is first driven to be collapsed or deployed, and then the canopy mechanism 300 in the collapsed or deployed state is driven to continue to rotate, so that the canopy mechanism 300 and the stroller 10 complete the folding or unfolding process synchronously. Compared with the design of the conventional stroller (for example, during the folding process of the stroller, the canopy mechanism remains in the unfolded state until it abuts against the lower handle frame and is then passively compressed and collapsed, which is easy to cause damage to the pivot mechanism of the canopy mechanism; or during the unfolding process of the stroller, the canopy mechanism remains in the collapsed state throughout the unfolding process, and needs to be manually deployed after the handle frame is fully unfolded, and the multi-stage operation is less convenient), the present application does not need to rely on external pressure or manual intervention.

In addition, the present application also solves the problem of lack of guidance and insufficient cushioning in the folding process of the canopy mechanism 300 by providing the locking mechanism 400. Specifically, the support base 310 of the canopy mechanism 300 rotates around the rotation axis S1, which provides a stable motion trajectory guide for the deploying or collapsing of the canopy mechanism 300, avoiding unexpected collisions caused by deflection or shaking of the canopy mechanism 300. The locking mechanism 400 effectively suppresses the inertial impact caused by the rapid rotation of the canopy mechanism 300 by limiting the continuous rotation of the support base 310, significantly reducing the rigid impact between the canopy mechanism 300 and the handle frame 100, thereby reducing the risk of component wear and structural deformation, and prolonging the overall service life of the stroller 10. Furthermore, the locking mechanism 400 adopts the locking protrusion 410 to cooperate with the plurality of engaging recesses 420 spaced part in the circumferential direction. When the first canopy bar 320 drives the support base 310 to rotate, the step-by-step disengagement and engagement motion between the locking protrusion 410 and the engaging recess 420 can convert the continuous rotation into a stepwise motion with multiple gears. Each gear shifting forms a cushioned pause through the mechanical concave-convex engagement, that is, the rotation impact force is dispersed to prevent the canopy mechanism 300 from quickly abutting against the handle frame 100 due to inertia, and accurate control of the deployed or collapsed angle is achieved through clear tactile feedback during gear shifting.

The technical features of the above-mentioned embodiments can be combined arbitrarily. In order to make the description concise, not all possible combinations of the technical features are described in the embodiments. However, as long as there is no contradiction in the combination of these technical features, the combinations should be considered to be within in the scope of the present application.

The above-described embodiments only illustrate several implementations of the present application, and the descriptions thereof are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be subjected to the appended claims.

## Claims

1. A stroller (10), comprising:
a handle frame (100) comprising an upper handle frame (110) and a lower handle frame (120) that are pivotally connected to each other;
a canopy mechanism (300) pivotable relative to the lower handle frame (120) and disposed in linkage with the upper handle frame (110); and
a locking mechanism (400) disposed between the canopy mechanism (300) and the lower handle frame (120) to restrict or allow the canopy mechanism (300) to pivot relative to the lower handle frame (120);
wherein in a process of the upper handle frame (110) pivoting relative to the lower handle frame (120), the upper handle frame (110) is capable of driving the canopy mechanism (300) to be collapsed or deployed, and drives the locking mechanism (400) to be unlocked, to allow the canopy mechanism (300) to pivot in a direction approaching or away from the lower handle frame (120).

2. The stroller (10) according to claim 1, wherein:
when the upper handle frame (110) is pivoted in the direction approaching the lower handle frame (120), the upper handle frame (110) drives the canopy mechanism (300) to be collapsed, and the collapsed canopy mechanism (300) is pivoted towards the lower handle frame (120) as the upper handle frame (110) is pivoted; and/or
when the upper handle frame (110) is pivoted in the direction away from the lower handle frame (120), the upper handle frame (110) drives the canopy mechanism (300) to be deployed, and the deployed canopy mechanism (300) is pivoted away from the lower handle frame (120) as the upper handle frame (110) is pivoted.

3. The stroller (10) according to any one of claims 1 to 2, wherein:
the canopy mechanism (300) comprises a support base (310) and a (first) canopy bar (320) that are connected to each other, wherein the support base (310) is pivotable relative to the lower handle frame (120) around a rotation axis, to enable the (first) canopy bar (320) to pivot relative to the lower handle frame (120); and
the process of the upper handle frame (110) pivoting relative to the lower handle frame (120) comprises a (first) stage in which the support base (310) and the (first) canopy bar (320) are fixed relative to the lower handle frame (120), and/or the process of the upper handle frame (110) pivoting relative to the lower handle frame (120) comprises a (second) stage in which the upper handle frame (110) is pivoted to drive the (first) canopy bar (320) to pivot in the direction approaching or away from the lower handle frame (120).

4. The stroller (10) according to any one of claims 1 to 3, wherein:
the canopy mechanism (300) has a deployed state and a collapsed state;
the canopy mechanism (300) further comprises a (second) canopy bar (330), wherein the (second) canopy bar (330) is fixed relative to the upper handle frame (110), and the (second) canopy bar (330) is capable of being pivoted relative to the lower handle frame (120) along with the upper handle frame (110); and
when the canopy mechanism (300) is in the deployed state, two canopy bars (320, 330), the first canopy bar (320) and the second canopy bar (330) are away from each other, and/or when the canopy mechanism (300) is in the collapsed state, two canopy bars (320, 330), the first canopy bar (320) and the second canopy bar (330) approach each other.

5. The stroller (10) according to any of claims 1 to 4, wherein a width of the first canopy bar (320) in a first direction, a width of the second canopy bar (330) in the first direction, and a width of the upper handle frame (110) in the first direction satisfy a condition of W1>W3>W2, where W1 denotes the width of the first canopy bar (320) in the first direction, W2 denotes the width of the second canopy bar (330) in the first direction, and W3 denotes the width of the upper handle frame (110) in the first direction.

6. The stroller (10) according to any one of claims 1 to 5, wherein the handle frame (100) further comprises a first pivot joint (130) comprising a first connecting base (131) and a second connecting base (132) that are pivotally connected to each other, the first connecting base (131) being connected to the upper handle frame (110), the second connecting base (132) being connected to the lower handle frame (120), and wherein the support base (310) is arranged on a side of the second connecting base (132) away from the first connecting base (131) and rotatable around the rotation axis.

7. The stroller (10) according to any of claims 1 to 6, wherein the locking mechanism (400) comprises an engaging protrusion (410) and an engaging recess (420), one of the support base (310) and the second connecting base (132) is provided with the engaging recess (420), and another of the support base (310) and the second connecting base (132) is provided with the engaging protrusion (410); and wherein when the engaging protrusion (410) extends into the engaging recess (420), the support base (310) is restricted from rotating relative to the second connecting base (132), and/or when the engaging protrusion (410) is separated from the engaging recess (420), the support base (310) is allowed to rotate relative to the second connecting base (132).

8. The stroller (10) according to any of claims 1 to 7, wherein:
a plurality of the engaging recesses (420) are provided, and the plurality of the engaging recesses (420) are spaced apart in a circumferential direction around the rotation axis; and
in the first stage, the engaging protrusion (410) remains extending into a current one of the plurality of the engaging recesses (420), and/or in the second stage, the engaging protrusion (410) is capable of being separated from the current engaging recess (420) and extending into an adjacent engaging recess (420) of the plurality of the engaging recesses (420) to restrict a continuous rotation of the support base (310) relative to the second connecting base (132).

9. The stroller (10) according to any of claims 1 to 8, wherein:
the support base (310) is movable relative to the second connecting base (132) in an axial direction of the rotation axis and has a first position and a second position;
when the support base (310) is at the first position, the engaging protrusion (410) extends into one of the plurality of engaging recesses (420), and/or when the support base (310) is at the second position, the engaging protrusion (410) is separated from the one of the plurality of engaging recesses (420); and
in the first stage, the support base (310) is kept at the first position, and/or in the second stage, the support base (310) moves back and forth between the first position and the second position.

10. The stroller (10) according to any one of claims 1 to 9, wherein the handle frame (100) further comprises a locking retaining mechanism (700) arranged between the upper handle frame (110) and the lower handle frame (120); and wherein when the upper handle frame (110) is pivoted relative to the lower handle frame (120) to be folded, the locking retaining mechanism (700) is adapted to lock the upper handle frame (110) and the lower handle frame (120) to restrict the upper handle frame (110) from unfolding relative to the lower handle frame (120).

11. The stroller (10) according to any one of claims 1 to 10, wherein the one of the support base (310) and the second connecting base (132) that is provided with the engaging recess (420) is further provided with a locking recess (460);
wherein the locking recess (460) is adapted to be in a locking fit with the engaging protrusion (410);
a dimension of the locking recess (460) is different from a dimension of the engaging recess (420),
and optionally wherein one of the second connecting base (132) and the support base (310) is provided with a limiting rib (1321), and another of the second connecting base (132) and the support base (310) is provided with a limiting groove (311);
the one of the support base (310) and the second connecting base (132) that is provided with the engaging recess (420) is further provided with a locking recess (460);
the locking recess (460) faces an end of the limiting groove (311) in a radial direction of the rotation axis.

12. The stroller (10) according to any of claims 1 to 11, wherein the locking recess (460) and/or the engaging protrusion (410) is provided with a sliding inclined surface;
wherein the engaging protrusion (410) pushes against the locking recess (460) by the sliding inclined surface to enable the engaging protrusion (410) to be separated from the locking recess (460);
and optionally wherein the engaging recess (420) and/or the engaging protrusion (410) is provided with a guiding inclined surface;
when the support base (310) rotates relative to the second connecting base (132), the engaging protrusion (410) pushes against the engaging recess (420) via the guiding inclined surface, and/or the support base (310) is driven to switch from the first position to the second position.

13. The stroller (10) according to any one of claims 1 to 10, wherein one of the second connecting base (132) and the support base (310) is provided with a limiting rib (1321), and/or another of the second connecting base (132) and the support base (310) is provided with a limiting groove (311); the limiting rib (1321) remains extended into the limiting groove (311) in a direction parallel to the rotation axis, and/or an end of the limiting groove (311) limits a rotation stroke of the support base (310) relative to the second connecting base (132);
and optionally wherein one of the second connecting base (132) and the support base (310) is provided with a limiting rib (1321), and/or another of the second connecting base (132) and the support base (310) is provided with a limiting groove (311); the limiting rib is capable of extending into the limiting groove (311) in a direction parallel to the rotation axis; when the engaging protrusion (410) is separated from the engaging recess (420), the limiting rib (1321) is separated from the limiting groove (311).

14. The stroller (10) according to any one of claims 1 to 13, wherein the locking mechanism (400) comprises:
a bracket (440) movably arranged between the second connecting base (132) and the support base (310) in the axial direction of the rotation axis, the bracket (440) being restricted from rotating relative to the second connecting base (132);
an engaging protrusion (410); and
an engaging recess (420);
wherein one of the support base (310) and the bracket (440) is provided with the engaging recess (420), and another of the support base (310) and the bracket (440) is provided with the engaging protrusion (410);
when the engaging protrusion (410) extends into the engaging recess (420), the support base (310) is restricted from rotating relative to the second connecting base (132), and/or when the engaging protrusion (410) is separated from the engaging recess (420), the support base (310) is allowed to rotate relative to the second connecting base (132).

15. The stroller (10) according to any of claims 1 to 14, wherein the locking mechanism (400) comprises a positioning recess (450), and the second connecting base (132) is provided with the positioning recess (450);
the bracket (440) has a third position and a fourth position; and
when the bracket (440) is at the third position, the engaging protrusion (410) engages with the engaging recess (420) and the positioning recess (450) to restrict the rotation of the support base (310) relative to the second connecting base (132); and/or when the bracket (440) is at the fourth position, the engaging protrusion (410) is engaged with the positioning recess (450) and disengaged from the engaging recess (420) to allow the support base (310) to rotate relative to the second connecting base (132);
and optionally wherein a second elastic member (800) is arranged between the bracket (440) and the second connecting base (132); and the second elastic member (800) is configured to bias the bracket (440) towards the third position.
